# NEUE EUROPÄISCHE PATENTSCHRIFT

(11) **EP 3 331 767 B2**
(45) Veröffentlichungstag und Bekanntmachung des Hinweises auf die Entscheidung über den Einspruch: **17.07.2024**
(45) Hinweis auf die Patenterteilung: 07.08.2019
(21) Anmeldenummer: 16754241.4
(22) Anmeldetag: 08.08.2016
(51) Int. Cl.: B65B 57/00, B65B 9/04, B29C 51/46, B65B 47/02, B29C 65/00, B65B 51/14, B65B 51/10, B29C 65/18, B65B 31/02

(54) **VERPACKUNGSMASCHINE MIT PROZESSGESTEUERTER FRÜHSTARTFUNKTION**
PACKAGING MACHINE HAVING A PROCESS-CONTROLLED EARLY START FUNCTION
MACHINE D'EMBALLAGE À FONCTION DE DÉMARRAGE PRÉCOCE COMMANDÉE PAR PROCESSUS

(30) Priorität: 06.08.2015 DE 102015214992
(43) Veröffentlichungstag der Anmeldung: 13.06.2018
(73) Patentinhaber: MULTIVAC Sepp Haggenmüller SE & Co. KG, 87787 Wolfertschwenden (DE)
(72) Erfinder: ENDERLE, Tobias, 87730 Bad Grönenbach (DE); HOLDERIED, Thomas, 87463 Dietmannsried (DE); BOTZENHARDT, Claus, 87439 Kempten (DE)
(74) Vertreter: Grünecker Patent- und Rechtsanwälte PartG mbB
(86) Internationale Anmeldenummer: PCT/EP2016/068902
(87) Internationale Veröffentlichungsnummer: WO 2017/021558

(56) Entgegenhaltungen:
- EP-A2- 1 433 708
- EP-A2- 1 818 159
- EP-A2- 2 241 862
- WO-A1-2009/109178
- DE-A1- 102013 105 548
- DE-B4- 102007 062 335
- DE-T2- 69 517 697
- US-A- 6 056 109
- US-A1- 2002 051 833
- US-A1- 2013 152 507
- MOSER ANDREAS: "Nutzung von Prozesswissen beim Thermoformen von Verpackungen .", VON DER FAKULTÄT FÜR INGENIEURWISSENSCHAFTEN, ABTEILUNG MASCHINENBAU UND VERFAHRENSTECHNIK DER UNIVERSITÄT DUISBURG-ESSEN, 12 June 2013 (2013-06-12), pages 1 - 135

## Beschreibung

Die vorliegende Erfindung betrifft eine selbststeuernde Verpackungsmaschine gemäß dem Anspruch 1. Weiterhin bezieht sich die vorliegende Erfindung auf ein Verfahren einer selbststeuernden Verpackungsmaschine gemäß dem unabhängigen Anspruch 14.

Bei bekannten Verpackungsmaschinen setzt sich der Herstellungsprozess aus einer Vielzahl von Einzelprozessen, wie z.B. Kammer schließen, Heizen, Formen, Evakuieren, Begasen, Siegeln, Kammer öffnen und Sicherheitszeiten, um Kammern ausreichend be- oder entlüften zu können, zusammen.

Die Einzelprozesse werden dabei zeitgesteuert, wobei die Einzelprozesse nacheinander, gegebenenfalls zeitweise überlappend oder durch Sicherheitszeitintervalle voneinander getrennt ablaufen. Die jeweiligen Prozesszeiten sind insbesondere von einem Kammervolumen, Folienarten, Bewegungsabläufen und Schaltzeiten von Ventilen der Verpackungsmaschine abhängig und müssen deshalb von den Maschinenbedienern für jede Maschinenausstattung sowie für jedes herzustellende Produkt aufwändig an der Bedienkonsole der Verpackungsmaschine voreingestellt werden.

Das Einstellen der jeweiligen Prozesszeiten der Verpackungsmaschine sowie die Abstimmung der jeweiligen Prozesszeiten aufeinander erfordert ein sehr großes Wissen über die einzelnen Prozesse vom Maschinenbediener, wobei es selbst bei sehr routinierten Maschinenbedienern vorkommt, dass mehrere Probeabläufe für die Verpackungsmaschine nötig sind, um die jeweiligen Prozesszeiten reibungslos aufeinander abgestimmt eingestellt zu bekommen.

Oftmals kommt es jedoch bei der Einstellung von Prozesszeiten der Verpackungsmaschine zu zeitlichen Verzögerungen, infolgedessen die Leistung der Verpackungsmaschine erheblich verringert wird.

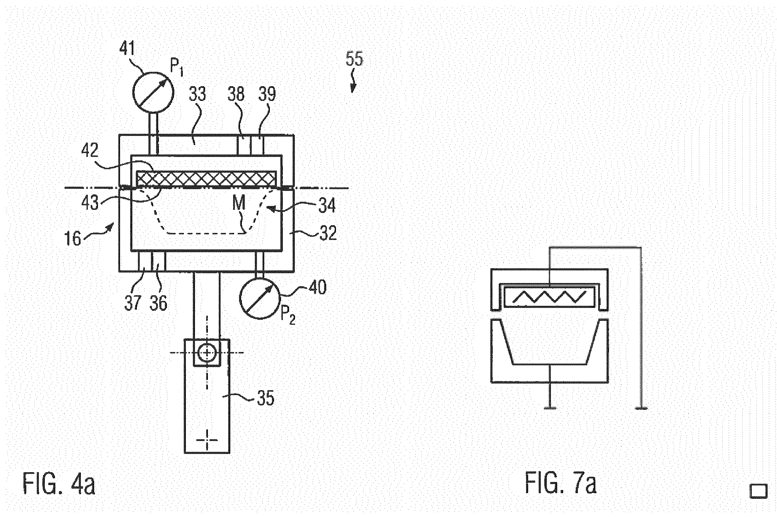

Eine bekannte Formstation zeigt Figur 7a. Diese umfasst ein Oberteil sowie ein Unterteil, welches mittels eines Hubwerks höhenverstellbar ist. Zwischen dem Oberteil und dem Unterteil ist in einer Formkammer eine Heizplatte vorgesehen, die zum Erwärmen eines zu verformenden Folienabschnitts dient. Weiter sind Im Oberteil und im Unterteil Druck- und Belüftungsventile vorgesehen, um einerseits den Folienabschnitt zunächst gegen die Heizplatte zu drücken und anderseits ein Druckformen einer Verpackungsmulde M zu ermöglichen. Diese Prozesse sind zeitgesteuert gemäß einem voreingestellten Zeitplan.

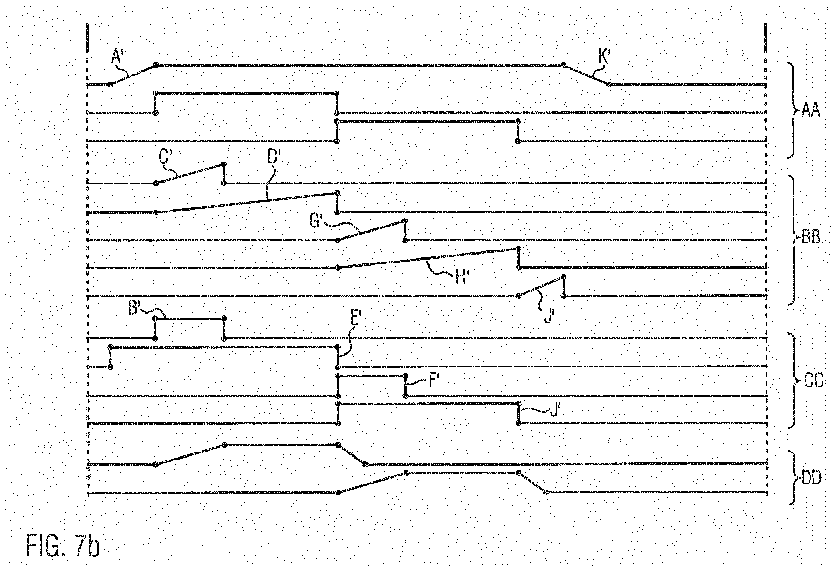

Die zeitgesteuerte Ventilschaltung wird in der Figur 7b verdeutlicht. Im Abschnitt AA sind die Hauptprozesse Hubwerk Öffnen/Schließen, Heizen und Formen abgebildet. Darunter im Abschnitt BB werden voreingestellte Prozesszeiten dargestellt, die durch den Bediener in der Verpackungsmaschine eingestellt werden. Im Abschnitt CC werden die Belüftungs- und Druckventilstellungen für das Oberteil und das Unterteil der Formstation gezeigt. Im Abschnitt DD werden die jeweiligen Druckverläufe in dem Oberteil und dem Unterteil angezeigt.

Nachdem die Formstation geschlossen wurde (Schritt A'), wird Druck im Unterteil erzeugt (Schritt B'). Der Druckaufbau ist zeitgesteuert (Schritt C') und unterbricht bzw. endet, sobald die vorbestimmte Zeit abgelaufen ist. Ebenso läuft eine voreingestellte Heizzeit der Heizplatte ab (Schritt D'). Nach Ablauf der Heizzeit öffnet das Belüftungsventil im Unterteil (Schritt E') und es wird Druck im Oberteil aufgebaut, um den erhitzten Folienabschnitt zu formen (Schritt F'). Der Druckaufbau sowie eine zum Formen voreingestellte Stabilisierungszeit laufen zeitgesteuert ab (Schritt G' und H'). Sobald die Stabilisierungszeit abgelaufen ist, öffnet die obere Belüftung (Schritt I'). Jetzt läuft noch eine voreingestellte Sicherheitszeit am Ende des Formprozesses ab (Schritt J'), bevor sich die Formstation öffnet (Schritt K').

Die Prozesse Hubwerk Öffnen/Schließen sind positionsgesteuert und Heizen und Formen sind bei der oberen Formstation zeitgesteuert. Daher muss der Bediener einen Zeitsteuerungsplan für die Formstation in der Steuerung eingeben. Beim Erstellen des Zeitsteuerungsplans tastet sich der Bediener durch mehrere Versuche an ein gewünschtes Verpackungsergebnis heran. Dieses Herantasten erfordert ein hohes Maß an Routine und kann nur von geschultem Personal vollbracht werden.

DE 10 2009 017 638 A1 offenbart eine Verpackungsmaschine, woran Prozesszeiten durch sich verändernde Randbedingungen anpassbar sind. Dabei richten sich die jeweiligen Prozesszeiten insbesondere an die Anzahl der zur Verfügung gestellten, zu verpackender Produkte.

EP 1 316 002 B1 offenbart eine Werkzeugmaschine, deren Betriebsablauf anhand von Zusatzdaten aus einer Datenbank regelbar ist.

DE 10 2012 005 912 A1 offenbart ein Verfahren zur Überprüfung der Verfügbarkeit der in einer Verpackungslinie eingesetzten Komponenten.

DE 10 2006 040 807 A1 offenbart eine Siegelstation für eine Verpackungsmaschine, wobei im Kraftfluss der Siegelstation ein Kraftsensor vorgesehen ist, welcher während des Siegelvorgangs eine Qualitätsüberwachung in Echtzeit ermöglicht.

DE 10 2005 059 312 A1 offenbart eine Verpackungsmaschine mit einer Leseeinheit zum Auslesen maschinenrelevanter Informationen eines in der Verpackungsmaschine eingesetzten Austauschteils.

EP 1 710 074 A1 offenbart eine Verpackungsmaschine mit einem Werkzeug, das einen Sensorchip aufweist. Aus dem Sensorchip ausgelesene Kennwerte des Werkzeugs können zur Einstellung der Verpackungsmaschine verwendet werden.

DE20 2010 017 361 U1 offenbart ein Verfahren, mittels welchem sich der Herstellungsprozess eines Fleischprodukts nachverfolgen lässt.

WO 00/19278 A1 bezieht sich nicht auf die Verpackungstechnik sondern offenbart ein Druck- oder Kopiersystem, bei welchem der Verbrauch von Druckerpatronen gesteuert und überwacht wird.

DE 10 2008 024 461 A1 offenbart eine Verpackungsmaschine mit einer Bearbeitungsstationssteuereinheit, die mit einer Zentralsteuereinheit der Verpackungsmaschine verbunden ist.

US 2013/0152507 A1 offenbart eine Verpackungsmaschine mit einer Frühstartfunktion für einen Abtrennvorgang, wobei die Frühstartfunktion hinsichtlich einer Rückkopplungsregelung basierend auf einem Soll-Längen-Ist-Vergleich eines vorangehenden abgeschlossenen Arbeitstakts gesteuert werden kann.

Bei einer bekannten Frühstartfunktion, die gemäß einer starren Zeitsteuerung abläuft, wird der Frühstart eines Prozesses ausschließlich unter Berücksichtigung einer zu ihm gehörigen Reaktionszeit (Totzeit) einer Arbeitskomponente vor Beendigung eines vorigen Prozesses durchgeführt. Allerdings setzt dies voraus, dass der vorige Prozess beim Starten des Frühstarts abgeschlossen ist. Bei einer prozessgesteuerten Verpackungsmaschine sind jedoch die jeweiligen Prozesse messdatenbasiert im Ablauf gewissermaßen flexibel, sodass bei solchen Maschinen die bekannte zeitgesteuerte Frühstartfunktion nicht immer funktioniert, insbesondere dann nicht, wenn sich die Prozesslaufzeit des vorangehenden Prozesses ändert. Aufgabe der Erfindung ist es, eine Verpackungsmaschine mit einer verbesserten Frühstartfunktion sowie ein Verfahren dafür zur Verfügung zu stellen.

Diese Aufgabe wird gelöst durch eine Verpackungsmaschine gemäß dem Anspruch 1 bzw. durch ein Verfahren gemäß dem unabhängigen Anspruch 14. Verbesserte Weiterbildungen der Erfindung sind Gegenstand der Unteransprüche.

Die Erfindung bezieht sich auf eine Verpackungsmaschine, die eine Steuereinheit, mehrere Messeinrichtungen sowie mehrere Arbeitseinheiten für unterschiedliche Prozesse umfasst, wobei die Steuereinheit mit den Arbeitseinheiten sowie mit den Messeinrichtungen funktional verbunden ist. Die Messeinrichtungen sind dazu konfiguriert sind, Ist-Prozesswerte an den jeweiligen Arbeitseinheiten zu erfassen und an die Steuereinheit weiterzuleiten, um einen Prozessstatus an den jeweiligen Arbeitseinheiten zu überwachen, wobei die Steuereinheit dazu ausgebildet ist, durch einen Vergleich der an sie von den jeweiligen Messeinrichtungen weitergeleiteten Ist-Prozesswerte mit dazugehörigen Soll-Prozesswerten aus einem mit ihr verbundenen Speicher einen Programmablauf für die jeweiligen Arbeitseinheiten selbst und/oder bezüglich der Arbeitseinheiten aufeinander abgestimmt selbststeuernd herzustellen, gemäß welchem die jeweiligen Arbeitseinheiten in Abhängigkeit der daran erfassten Ist-Prozesswerte selbst und/oder aufeinander abgestimmt funktionieren.

Ein Arbeitstakt an der erfindungsgemäßen Verpackungsmaschine umfasst mindestens einen ersten Funktionsvorgang und einen zweiten Funktionsvorgang an einer oder an unterschiedlichen Arbeitseinheiten, wobei der zweite Funktionsvorgang später beginnt als der erste Funktionsvorgang.

Bei der Erfindung ist die Steuereinheit dazu ausgebildet, einen Frühstart für den zweiten Funktionsvorgang einer Arbeitseinheit durchzuführen, wenn ein Ist-Prozesswert des vorangehenden ersten Funktionsvorgangs des Programmablaufs der oder einer anderen Arbeitseinheit noch nicht den jeweiligen Soll-Prozesswert erreicht hat, wobei die Steuereinheit dazu ausgebildet ist, den Frühstart basierend auf einer vorbestimmten Reaktionszeit der Arbeitseinheit für den zweiten Funktionsvorgang des Programmablaufs der Arbeitseinheit durchzuführen.

Erfindungsgemäß ist die Steuereinheit dazu ausgebildet, den Frühstart des zweiten Funktionsvorgangs basierend auf einem Näherungsverfahren zur Vorbestimmung des zeitlichen Endes des ersten Funktionsvorgangs mittels einer an der Arbeitseinheit mittels einer der Messeinrichtungen erfassten zeitabhängigen Messgröße des ersten Funktionsvorgangs anzusteuern.

Erfindungsgemäß ist die Steuereinheit dazu ausgebildet, basierend auf dem Näherungsverfahren eine verbleibende Restlaufzeit des vorangehenden ersten Funktionsablaufs zu bestimmen, welche die Dauer angibt, bis die Messgröße den Soll-Prozesswert erreicht, wobei die Steuereinheit ferner dazu ausgebildet ist, den Frühstart durchzuführen, wenn die Restlaufzeit kleiner oder gleich der vorbestimmten Reaktionszeit ist.

Vorzugsweise ist mittels des Näherungsverfahrens eine prozessabhängige Änderungsrate einer an der Arbeitseinheit mittels einer der Messeinrichtungen erfassten zeitabhängigen Messgröße des ersten Funktionsvorgangs bestimmbar oder das Näherungsverfahren ist dazu konfiguriert, eine Anpassung an eine mathematische Funktion durchzuführen. Die mathematische Funktion kann sich vom Grundtyp her (z. B. Exponentialfunktion) aus dem zugrundeliegenden Prozess ergeben. Sie kann aus den Messwerten fortlaufend approximiert werden und erlaubt durch Extrapolation eine Vorhersage, wann ein bestimmter Sollwert erreicht werden dürfte, bzw. wann der Prozess beendet sein dürfte.

Aus der Änderungsrate der erfassten zeitabhängigen Messgröße des ersten Funktionsvorgangs kann abgeleitet werden, wie schnell sich die Messgröße ändert, d.h. die Änderung der Messgröße pro Zeit. Anhand dieser Information kann im Programmablauf unter Berücksichtigung des ersten Funktionsvorgangs, d.h. prozessgesteuert basierend auf dessen Programmfortschritt, der zweite Funktionsvorgang per Frühstart aktiviert werden, sodass die jeweiligen Funktionsvorgänge in einem engeren Zeitfenster ablaufen können, was zu einer verbesserten Maschinenproduktivität führt.

Im Gegensatz zu der bekannten zeitgesteuerten Frühstartfunktion bietet die erfindungsgemäße prozessgesteuerte Frühstartfunktion auch den Vorteil, dass ein Wechsel eines Herstellungsprozesses unterschiedlicher Produktchargen ohne großen, die Zeitsteuerung betreffenden Aufwand für den Einstellvorgang an der Verpackungsmaschine ablaufen kann.

Vorzugsweise ist für die Steuereinheit ein Schwellenwert für die Änderungsrate hinterlegt, wobei die Steuereinheit dazu ausgebildet ist, eine Berechnung der Restlaufzeit zu starten, wenn die Änderungsrate dem Schwellenwert entspricht oder kleiner als der Schwellenwert ist.

Gemäß einer Ausführungsform ist die Steuereinheit dazu ausgebildet, den Schwellenwert anhand einer Trendregelung zu bestimmen. Bevorzugterweise ist die Steuereinheit dazu ausgebildet, den Schwellenwert zu erhöhen, wenn über eine vorbestimmte Anzahl erfasster Änderungsraten der zeitabhängigen Messgröße des ersten Funktionsvorgangs ohne Unterbrechung als Bedingung erfüllt ist, dass die berechnete Restlaufzeit kleiner oder gleich der vorbestimmten Reaktionszeit ist, und/oder dass die Steuereinheit dazu ausgebildet ist, den Schwellenwert herabzusetzen, wenn über eine vorbestimmte Anzahl erfasster Änderungsraten der zeitabhängigen Messgröße des ersten Funktionsvorgangs ohne Unterbrechung als Bedingung erfüllt ist, dass die berechnete Restlaufzeit größer als die vorbestimmte Reaktionszeit ist.

Vorzugsweise ist die Steuereinheit dazu ausgebildet, den Schwellenwert schrittweise solange zu erhöhen oder herabzusetzen, bis mindestens einmal die berechnete Restlaufzeit kleiner/größer als die vorbestimmte Reaktionszeit ist.

Gemäß einer Variante ist die Steuereinheit zur Festlegung der Bedingung mit einem Ringpuffer verbunden.

Vorzugsweise ist die Steuereinheit dazu ausgebildet, eine Berechnung der Restlaufzeit solange fortlaufend durchzuführen und den Frühstart zu verzögern, bis die berechnete Restlaufzeit kleiner oder gleich der vorbestimmten Reaktionszeit ist.

Bei einer Ausführungsform ist die zeitabhängige Messgröße ein an der Arbeitseinheit anliegender Druck, welcher mittels eines an der Arbeitseinheit ausgebildeten und mit der Steuereinheit funktional verbundenen Drucksensors erfassbar ist, wobei die mittels der Steuereinheit errechenbare Änderungsrate eine Änderungsgeschwindigkeit des erfassten Drucks ableitbar ist.

Vorzugsweise ist die Steuereinheit dazu konfiguriert, aus einer vorbestimmten Anzahl erfasster Messwerte der zeitabhängigen Messgröße eine Regressionsgerade zu bestimmen, wobei die Änderungsrate eine Steigung der Regressionsgeraden ist.

Es ist möglich, dass die Steuereinheit dazu ausgebildet ist, die Reaktionszeit basierend auf einer Zeitmessung zu bestimmen, wobei die Reaktionszeit als Dauer zwischen einer Aktivierung eines Startsignals und einer an der Arbeitseinheit dadurch ausgelösten Verstellbewegung oder bereits einer Änderung eines an der Arbeitseinheit anliegenden Druckes oder einer Änderungsrate des Druckes festgelegt ist.

Vorzugsweise ist die Steuereinheit dazu ausgebildet, zyklisch bei jedem ersten Funktionsvorgang die Reaktionszeit zu bestimmen und anhand einer Mittelwertbildung aus einer vorbestimmten Anzahl erfasster Reaktionszeiten eine gemittelte Reaktionszeit zu berechnen, bezüglicher welcher der Frühstart des zweiten Funktionsvorgangs ausführbar ist.

Vorzugsweise ist die Steuereinheit dazu ausgebildet, zyklisch die Reaktionszeit eines oder mehrerer Stellglieder eines Funktionsvorgangs, insbesondere eines dafür eingesetzten Ventils, zu ermitteln und anhand einer Tendenz der ermittelten Reaktionszeit eine zu erwartende Einsatzzeit des Stellglieds zu berechnen. Vorzugsweise ist die zu erwartende Einsatzzeit mittels einer HMI-Schnittestelle der Verpackungsmaschine einem Bediener anzeigbar.

Gemäß einer Variante umfasst die Steuereinheit eine Notfallsteuerung für den Betrieb der Verpackungsmaschine, wobei die Steuereinheit dazu ausgebildet ist, die prozessdatenbasierte Steuerung der Verpackungsmaschine durch eine zeitbasierte Steuerung zu ersetzen, wenn eine vorbestimmte Anzahl berechneter Reaktionszeiten während des Betriebs der Verpackungsmaschine einen Funktionsschwellenwert erreicht oder diesen übertrifft.

Vorzugsweise ist die Verpackungsmaschine eine Tiefziehverpackungsmaschine, ein Traysealer oder eine Kammerbandmaschine.

Vorzugsweise handelt es sich bei den Soll-Prozesswerten um eine optimale Form- und/oder Siegeltemperatur, einen optimalen Heiz-, Siegel- und/oder Formdruck, und/oder um mindestens eine Stabilisierungszeit für eine als Formstation ausgebildete Arbeitseinheit.

Vorzugsweise umfassen die jeweiligen Messeinrichtungen mindestens einen Kraft-, Druck-, Weg-, Temperatur-, Infrarot-, Ultraschall-, Induktions-, Laser- und/oder Feuchtigkeitssensor.

Vorzugsweise ist die Steuereinheit dazu ausgebildet, die automatische Frühstartfunktion an mehreren Arbeitseinheiten für diverse Funktionsvorgänge durchzuführen, insbesondere für eine Vorschubregelung eines Transportbandes der Verpackungsmaschine, für einen Heizvorgang an einer Formstation oder der Siegelstation, für diverse Hubvorgänge eines Hubwerks der Formstation oder der Siegelstation, für einen Formvorgang der Formstation, für einen Begasungsvorgang an der Siegelstation, für diverse Druckerzeugungsvorgänge an der Formstation oder der Siegelstation, für einen Schneidvorgang und/oder für einen Transfervorgang mittels eines Pickers zum Versetzen fertiger Produkte anzuwenden. Für den Fall, dass die Frühstartfunktion an mehreren Arbeitseinheiten durchgeführt wird, kann ein messdatenbasierter Programmablauf die jeweiligen Arbeitsschnitte an den Arbeitseinheiten selbst und/oder die jeweiligen Programmabläufe der jeweiligen Arbeitseinheiten untereinander anpassen.

Vorstellbar ist auch, dass die Steuereinheit dazu ausgebildet ist, die Frühstartfunktion zwischen jeweiligen Funktionsvorgängen unterschiedlicher Arbeitseinheiten, beispielsweise zwischen einer Formstation und einer Siegelstation, durchzuführen.

Das erfindungsgemäße Prinzip der Frühstartdurchführung lässt sich beliebig an und zwischen unterschiedlichen Arbeitseinheiten der Verpackungsmaschine durchführen, sodass es zu einer produktivitätssteigernden funktionalen Verkettung der jeweiligen Funktionsvorgänge kommen kann.

Weiter bezieht sich die Erfindung auf ein Verfahren zur Selbststeuerung eines Programmablaufs eines Prozesses an unterschiedlichen Arbeitseinheiten einer Verpackungsmaschine, wobei gemäß dem Programmablauf ein Prozess und/oder gemäß dem Programmablauf mehrere, funktional aufeinander abgestimmte Prozesse während des Betriebs der Verpackungsmaschine an den jeweiligen Arbeitseinheiten durchgeführt werden, wobei an den jeweiligen Arbeitseinheiten Ist-Prozesswerte erfasst und an eine Steuereinheit der Verpackungsmaschine weitergeleitet werden, wobei die Steuereinheit die an sie weitergeleiteten Ist-Prozesswerte mit dazugehörigen Soll-Prozesswerten vergleicht und daraus resultierend den jeweiligen Programmablauf für die Arbeitseinheiten selbst und/oder bezüglich der jeweiligen Arbeitseinheiten aufeinander abgestimmt selbststeuernd herstellt und darauf basierend den Betrieb der Verpackungsmaschine koordiniert, wobei innerhalb eines Arbeitstakts an der Verpackungsmaschine mindestens ein erster Funktionsvorgang und ein zweiter Funktionsvorgang an einer oder an unterschiedlichen Arbeitseinheiten ablaufen, wobei der zweite Funktionsvorgang später beginnt als der erste Funktionsvorgang, wobei die Steuereinheit für den zweiten Funktionsvorgang des Programmablaufs einer Arbeitseinheit einen Frühstart durchführt, wenn ein Ist-Prozesswert des ersten Funktionsvorgangs des Programmablaufs der oder einer anderen Arbeitseinheit noch nicht den jeweiligen Soll-Prozesswert erreicht hat, wobei die Steuereinheit den Frühstart basierend auf einer vorbestimmten Reaktionszeit der Arbeitseinheit für den zweiten Funktionsvorgang des Programmablaufs der Arbeitseinheit durchführt, und wobei die Steuereinheit den Frühstart des zweiten Funktionsvorgangs basierend auf einem Näherungsverfahren zur Vorbestimmung des zeitlichen Endes des ersten Funktionsvorgangs mittels einer an der Arbeitsstation mittels einer der Messeinrichtungen erfassten zeitabhängigen Messgröße des ersten Funktionsvorgangs ansteuert.

Erfindungsgemäß bestimmt die Steuereinheit basierend auf dem Näherungsverfahren eine verbleibende Restlaufzeit des ersten Funktionsvorgangs, welche die Dauer angibt, bis die Messgröße den Soll-Prozesswert erreicht, wobei die Steuereinheit ferner den Frühstart spätestens dann einleitet, wenn die Restlaufzeit kleiner oder gleich der vorbestimmten Reaktionszeit ist.

Vorzugsweise bestimmt das Näherungsverfahren eine Änderungsrate der an der Arbeitsstation erfassten Messgröße des ersten Funktionsvorgangs oder führt eine Anpassung an eine vorgegebene mathematische Funktion durch (siehe oben).

Gemäß einer Variante bestimmt die Steuereinheit einen Schwellenwert für die Änderungsrate, wobei die Steuereinheit eine Berechnung der Restlaufzeit startet, wenn die Änderungsrate dem Schwellenwert entspricht oder kleiner als der Schwellenwert ist.

Vorzugsweise berechnet die Steuereinheit den Schwellenwert anhand einer Trendregelung. Bevorzugterweise erhöht die Steuereinheit den Schwellenwert, wenn über eine vorbestimmte Anzahl erfasster Änderungsraten der zeitabhängigen Messgröße des ersten Funktionsvorgangs ohne Unterbrechung als Bedingung erfüllt wird, dass die berechnete Restlaufzeit kleiner oder gleich der vorbestimmten Reaktionszeit ist, und/oder die Steuereinheit den Schwellenwert herabsetzt, wenn über eine vorbestimmte Anzahl erfasster Änderungsraten der zeitabhängigen Messgröße des ersten Funktionsvorgangs ohne Unterbrechung als Bedingung erfüllt wird, dass die berechnete Restlaufzeit größer als die vorbestimmte Reaktionszeit ist. Vorzugsweise wird ein an der Arbeitseinheit anliegender Druck mittels eines an der Arbeitseinheit ausgebildeten und mit der Steuereinheit funktional verbundenen Drucksensors erfasst, wobei die Steuereinheit als Änderungsrate eine Änderungsgeschwindigkeit des erfassten Drucks festlegt, worauf basierend die Steuereinheit die Restlaufzeit bestimmen kann.

Die Steuereinheit misst vorzugsweise intervallweise, vorzugsweise in konstanten Abständen von 1 bis 50 Millisekunden die zeitabhängige Messgröße.

Gemäß einer Ausführungsform wird ein Siegelvorgang an einer als Arbeitseinheit ausgebildeten Siegelstation durch den Frühstart ausgelöst, und das Erfassen des Drucks innerhalb der Siegelstation während eines dem Siegelvorgang vorangehenden Evakuierungsvorgangs und/oder Begasungsvorgangs durchgeführt.

Vorzugsweise bestimmt die Steuereinheit die Reaktionszeit basierend auf einer Zeitmessung, wobei die Reaktionszeit als Dauer zwischen einer Aktivierung eines Startsignals und einer an der Antriebseinheit dadurch ausgelösten Verstellbewegung oder bereits anhand einer Änderung eines an der Arbeitseinheit anliegenden Druckes oder einer Änderungsrate des Druckes festgelegt wird.

Vornehmlich bestimmt die Steuereinheit zyklisch bei jedem taktweise wiederholten zweiten Funktionsvorgang die Reaktionszeit und bestimmt anhand einer Mittelwertbildung aus einer vorbestimmten Anzahl erfasster Reaktionszeiten eine gemittelte Reaktionszeit, bezüglich welcher der Frühstart des zweiten Funktionsvorgangs ausgeführt wird.

Vorzugsweise ermittelt die Steuereinheit zyklisch die Reaktionszeit eines oder mehrerer Stellglieder eines Funktionsvorgangs, insbesondere eines dafür eingesetzten Ventils, und berechnet daraus anhand einer Tendenz der jeweiligen Messwerte der ermittelten Reaktionszeit eine zu erwartende Einsatzzeit des Stellglieds. Vorzugsweise wird die zu erwartende Einsatzzeit mittels einer HMI-Schnittstelle der Verpackungsmaschine einem Bediener angezeigt.

Vorzugsweise führt die Steuereinheit eine Notfallsteuerung für den Betrieb der Verpackungsmaschine durch, wobei die Steuereinheit die prozessdatenbasierte Steuerung der Verpackungsmaschine durch eine zeitbasierte Steuerung ersetzt, wenn eine vorbestimmte Anzahl berechneter Reaktionszeiten während des Betriebs der Verpackungsmaschine einen Funktionsschwellenwert erreicht oder diesen übertrifft.

Bei einer oder mehreren Ausführungsformen der Erfindung sind im Gegensatz zu bekannten zeitgesteuerten Verpackungsmaschinen die erfindungsgemäße Verpackungsmaschine sowie das Verfahren dafür mittels intelligenter Sensorik und Steuerungstechnik prozessgesteuert. Die jeweiligen Arbeitsprozesse werden insbesondere mittels Sensoren überwacht und in Abhängigkeit damit erfasster Werte gesteuert. Bei einer bevorzugten Verpackungsmaschine ist der Programmablauf der an ihr eingesetzten Arbeitseinheiten nicht mehr primär an durch den Bediener voreingestellte Prozesszeiten gebunden, sondern wird während des Betriebs an den aktuellen Herstellungsprozess, insbesondere an den messbaren Prozessfortschritt der jeweiligen Arbeitseinheiten angepasst. Dabei wird vor allem überwacht, wie weit Ist-Prozesswerte hinsichtlich vorgegebener oder errechenbarer Soll-Prozesswerte an den jeweiligen Arbeitseinheiten fortgeschritten sind. Auf starr ablaufende Prozesszeiten, die wie bisher an der Maschine vom Bediener manuell voreingestellt wurden, wird primär keine Rücksicht mehr genommen, weil die jeweiligen Prozesse an den Arbeitseinheiten solange laufen, bis ein oder mehrere Soll-Prozesswerte erreicht sind, d.h., dass die jeweiligen Prozesse sensorgesteuert sind.

Wenn überhaupt, dann werden bei der Erfindung Prozesszeiten verwendet, die automatisch aus einem Speicher abrufbar sind und anhand von spezifischen Herstellungsparametern, betreffend das Produkt, das Werkzeug und/oder das Verpackungsmaterial generierbar sind. Somit kann die Verpackungsmaschine bei einem Werkzeugwechsel und/oder einem Produktwechsel schnell angepasst werden, ohne dass der Bediener lange Zeit zur Neueinstellung der Verpackungsmaschine benötigt. Bei der Erfindung passt die Verpackungsmaschine daher ihren Betrieb selbst optimal an.

Dafür umfasst die Verpackungsmaschine eine Steuereinheit, mehrere Messeinrichtungen sowie mehrere Arbeitseinheiten für unterschiedliche Prozesse, wobei die Steuereinheit mit den Arbeitseinheiten sowie mit den Messeinrichtungen funktional verbunden ist. Die Messeinrichtungen sind dazu konfiguriert, Ist-Prozesswerte an den jeweiligen Arbeitseinheiten zu erfassen und an die Steuereinheit weiterzuleiten, um einen Prozessstatus an den jeweiligen Arbeitseinheiten zu überwachen. Die Steuereinheit ist dazu ausgebildet, durch einen Vergleich der an sie von den jeweiligen Messeinrichtungen weitergeleiteten Ist-Prozesswerte mit dazugehörigen Soll-Prozesswerten, insbesondere mit einem dazugehörigen Soll-Prozesswert-Bereich, aus einem mit ihr verbundenen Speicher einen Programmablauf für die jeweiligen Arbeitseinheiten selbst und/oder bezüglich der Arbeitseinheiten aufeinander abgestimmt selbststeuernd herzustellen. Die jeweiligen Arbeitseinheiten können dann in Abhängigkeit der daran erfassten Ist-Prozesswerte selbst und/oder diesbezüglich aufeinander abgestimmt funktionieren.

Selbststeuernd im Sinne der Erfindung bedeutet, dass der Programmablauf an mindestens einer Arbeitseinheit nicht gemäß einer voreingestellten Prozesszeit abläuft. Der Programmablauf an einer Arbeitseinheit passt sich vielmehr bezüglich den daran erfassten Ist-Prozesswerten an, ist also sensorgesteuert. Bei der Erfindung funktioniert die Steuereinheit als funktionales Bindeglied zwischen den Messeinrichtungen und den Arbeitseinheiten. Vorzugsweise werden die erfassten Ist-Prozesswerte von den Messeinrichtungen an die Steuereinheit weitergeleitet, welche hinsichtlich der Ist-Prozesswerte die jeweiligen Programmabläufe für die Arbeitseinheiten selbst und/oder aufeinander angepasst steuert.

Insbesondere kann ein Prozess an einer Arbeitseinheit dann beginnen, wenn eine funktional vorausgelagerte Arbeitseinheit mindestens einen sollwertigen Prozesswert erreicht. So lässt sich insbesondere die Abfolge der einzelnen Arbeitseinheiten gut aufeinander abstimmen. Es lässt sich bei der Erfindung eine funktionale Verknüpfung zwischen den einzelnen Arbeitseinheiten herstellen, sodass die jeweiligen Arbeitseinheiten nahtlos aufeinander folgend arbeiten können.

Außerdem ermöglicht die Erfindung mittels der Ist-Prozesswertebestimmung an den jeweiligen Arbeitseinheiten eine Frühstartermittlung einzelner Arbeitseinheiten. Dies beruht darauf, dass für das Ansteuern der Ventile und/oder für das Generieren von Steuersignalen eine gewisse Reaktionszeit benötigt wird, die in Fachkreisen auch Totzeit genannt wird. Um solche Totzeiten zu verringern, kann bei der Erfindung basierend auf der Ist-Prozesswertermittlung mindestens der Ablauf einer Arbeitseinheit vorzeitig, d.h. gewisse Zeit vor dem Erreichen eines Soll-Prozesswertes, gestartet werden. Dies führt insgesamt zu Zeitersparnissen, weil die jeweiligen Arbeitsprozesse im Ablauf besser aufeinander abgestimmt sind.

Vorzugsweise unterscheidet sich die Verpackungsmaschine im Wesentlichen dadurch vom Stand der Technik, dass sie nicht mehr zeitgesteuert gemäß einem voreingestellten starren Programmablauf, d.h. mit bestimmten Prozesszeiten für die jeweiligen Arbeitseinheiten betrieben wird. Vielmehr ist die erfindungsgemäße Verpackungsmaschine mittels der an ihr vorhandenen Sensorik und Steuerung dazu in der Lage, die jeweiligen Prozesse der Arbeitseinheiten herstellungspräzise an die aktuell daran erfassten Ist-Prozesswerte, und zwar unabhängig davon, wie lange der jeweilige Prozess bereits durchgeführt wurde, anzupassen. Die jeweiligen Prozesse lassen sich dadurch in wirtschaftlicher Hinsicht optimiert durchführen und können gegebenenfalls derart aufeinander abgestimmt ablaufen, dass insgesamt größere Losgrößen innerhalb geringerer Zykluszeiten herstellbar sind. Außerdem lässt sich damit für sämtliche Produkte dieselbe Qualität erzeugen.

Im Gegensatz zum Stand der Technik hängt somit bei Varianten der Erfindung die Leistung der Verpackungsmaschine nicht mehr von der Einstellfähigkeit des Maschinenbedieners ab, sondern von den technischen Fertigkeiten der Verpackungsmaschine selbst, sich selbststeuernd an den Herstellungsprozess, d.h. an die aktuell erfassten Prozesswerte an den Arbeitseinheiten, anzupassen.

Besonders vorteilhaft hat sich die erfindungsgemäße Verpackungsmaschine für die Startphase eines Herstellungsprozesses gezeigt, weil dabei nicht mehr mehrere Probeanläufe zur optimalen Einstellung der Verpackungsmaschine nötig sind. Vielmehr ermöglicht die erfindungsgemäße Verpackungsmaschine eine von Anfang an optimale Herstellung zu erzeugender Produkte, weil die jeweiligen Prozesse an den Arbeitseinheiten sofort hinsichtlich der daran erfassten Ist-Prozesswerte mittels der Steuereinheit per Rückkopplung im Ablauf steuerbar sind.

Dadurch, dass bei der Erfindung die Verpackungsmaschine selbst zur Optimierung der daran durchgeführten Prozesse ausgebildet ist, kommt es zu einer erhöhten Taktleistung, wobei Personalkosten reduziert werden können.

Vorzugsweise umfasst die Verpackungsmaschine mindestens einen als Arbeitseinheit ausgebildeten Roboter. Dieser kommt insbesondere als Bestücker zu befüllender Verpackungen zum Einsatz. Der Betrieb des Roboters kann bei der Erfindung bezüglich des Ablaufs anderer Arbeitseinheiten angepasst werden. Insbesondere können vom Roboterarm durchgeführte Beschleunigungen hinsichtlich des Fortschritts anderer Arbeitseinheiten an der Verpackungsmaschine angepasst werden.

Gemäß einer Ausführungsform der Erfindung kann die Verpackungsmaschine als eine Tiefziehverpackungsmaschine, ein Traysealer, oder eine Kammerbandmaschine ausgebildet sein. Da bei solchen Verpackungsmaschinen mehrere Arbeitsprozesse, insbesondere in Abstimmung zueinander, ablaufen, lässt sich die selbststeuernde Rückkopplung anhand der Steuereinheit der erfindungsgemäßen Verpackungsmaschine besonders leistungssteigernd einsetzen. Diese Verpackungsmaschinen können dann selbststeuernd und automatisch ihren Herstellungsprozess regeln, ohne dabei primär auf voreingestellte Prozessarbeitszeitzyklen zurückgreifen zu müssen. Diesbezüglich lassen sich an solchen Maschinen insbesondere auch Umrüstzeiten enorm reduzieren.

Vorzugsweise dient der mit der Steuereinheit verbundene Speicher insbesondere als Datenreservoir, aus welchem die Steuereinheit die Soll-Prozesswerte erhält, um möglichst zeitnah zur Erfassung der Ist-Prozesswerte diesbezüglich eine rückkoppelnde Steuerung der jeweiligen Arbeitseinheiten durchzuführen.

Insbesondere ist es möglich, dass der Speicher als Datenbank, vorzugsweise als Wissensdatenbank, ausgebildet ist, die dazu konfiguriert ist, hinsichtlich Daten eines mittels der Verpackungsmaschine herzustellenden Produkts die Soll-Prozesswerte für die jeweiligen Arbeitseinheiten herzuleiten. Bevorzugterweise kann das herzustellende Produkt, insbesondere eine Folienspezifikation, ein Werkzeugtyp und/oder ein zu verpackendes Lebensmittelprodukt, über eine Eingabekonsole der Verpackungsmaschine aufgerufen werden, wobei basierend auf dieser Einstellung ein besonderer Datensatz an Soll-Prozesswerten durch den Speicher, insbesondere die darin enthaltene Datenbank, der Steuereinheit für den Herstellungsprozess zur Verfügung gestellt werden kann. Dies hätte den Vorteil, dass der Maschinenbediener bei Produktionsstart lediglich das herzustellende Produkt auf der Eingabekonsole der Verpackungsmaschine auswählen muss, wobei in Folge darauf der Herstellungsprozess selbststeuernd durch die Verpackungsmaschine übernommen wird.

Besonders vielseitig lässt sich die Datenbank dann einsetzen, wenn sie als Bestandteil eines Datenbanksystems ausgebildet ist, wobei das Datenbanksystem weiter eine Datenbankverwaltungseinheit umfasst, die für einen bidirektionalen Datenaustausch zwischen der Steuereinheit und der Datenbank konfiguriert ist. Mittels der Datenbankverwaltungseinheit lassen sich nicht nur basierend auf den erfassten Ist-Prozesswerten an den Arbeitseinheiten diesbezüglich die relevanten Soll-Prozesswerte aus der Datenbank ermitteln und/oder auslesen, sondern darüber hinaus auch Steuerungsfunktionen, insbesondere ausgehend von der Steuereinheit an der Datenbank, durchführen, so dass beispielsweise auf der Datenbank hinterlegte Datensätze korrigiert, angepasst und/oder ersetzt werden können. Die erfindungsgemäße Verpackungsmaschine ließe sich dann beispielsweise angesichts eines neu, nicht bereits zuvor damit hergestellten Produkts problemlos an ein solches anpassen. Updates der auf der Datenbank hinterlegten Datensätze ließen sich beispielsweise über eine VPN-Verbindung, eine Drahtlosverbindung, beispielsweise mittels RFID, oder von einem USB-Stick auf die Datenbank spielen.

Vorzugsweise werden die Prozesse an der Verpackungsmaschine insbesondere durch format-, prozess- und/oder folienabhängige Informationen gesteuert. Folienabhängige Informationen betreffen vor allem eine Ziehtiefe, eine Siegelnahtbreite, ein Endvakuum beim Siegeln, eine Anzahl von Packungen, eine Packungsgröße und/oder eine Formtiefe. Prozessabhängige Informationen sind vor allem ein spezifischer Formdruck, ein spezifischer Siegeldruck, eine Schneidzeit, maximal zulässige Frühstartzeiten beim Öffnen oder Schließen eines Hubwerks und/oder maximal zulässige Frühstartzeiten beim Folienvorschub. Folienabhängige Informationen sind insbesondere ein Folientyp, eine Siegelschicht, eine Foliendicke, eine Siegelschichtdicke, eine Abkühlzeit (Stabilisierungszeit) in der Form, eine ideale Heizzeit, eine ideale Siegelzeit, eine ideale Heiztemperatur beim Formen und Vorheizen und/oder eine ideale Heiztemperatur beim Siegeln. Insbesondere ist die Steuereinheit dazu konfiguriert, basierend auf den format-, prozess- und/oder folienabhängigen Informationen die Soll-Prozesswerte und/oder Steuersignale für den Herstellungsprozess herzustellen. Vorzugsweise basieren die Soll-Prozesswerte auf Daten des herzustellenden Produkts, die für dieses insbesondere eine Siegelfläche, einen Siegeldruck, ein Endvakuum, eine Folienart und/oder eine Foliendicke oder eine Folienspezifikation, wie beispielsweise den Schichtaufbau, angeben.

Vorzugsweise können Informationen betreffend die Folienspezifikation mittels einer Drahtlosverbindung in der Datenbank hinterlegt werden. insbesondere können die Informationen über das Folienmaterial von einem an der Folie befestigten RFID-Tag mittels eines an der Verpackungsmaschine vorgesehenen RFID-Lesegeräts ausgelesen und von diesem in der Datenbank hinterlegt werden.

Für jedes herzustellende Produkt gibt es vorzugsweise eine Vorauswahl bestimmter Soll-Prozesswerte, die der prozessgeführten Selbststeuerungsfunktion der Verpackungsmaschine während des Betriebs zur Verfügung stehen. Die Programmabläufe an den jeweiligen Arbeitseinheiten sind somit hinsichtlich der vorgegebenen Soll-Prozesswerte anpassbar.

Vorzugsweise geben die Soll-Prozesswerte eine optimale Form- und/oder Siegeltemperatur, einen optimalen Siegel- und/oder Formdruck, und/oder für eine als Formstation ausgebildete Arbeitseinheit mindestens eine Stabilisierungszeit an. Mit Erreichen des oder der vorgegebenen optimalen Soll-Prozesswerte kann die Steuereinheit darüber entscheiden, wann der Prozess an einer Arbeitseinheit beendet und ein nachfolgender Prozess an derselben Arbeitseinheit oder an einer anderen Arbeitseinheit gestartet werden kann, um den Produktionsablauf mit fließenden Übergängen zwischen den Prozessen der jeweiligen Arbeitseinheiten zu steuern.

Gemäß einer Ausführungsvariante ist der Speicher in der Steuereinheit integriert ausgebildet oder liegt alternativ als externe Einheit vor. Bei der integralen Ausbildung des Speichers in der Steuereinheit kann der Speicher direkt über eine Bedienkonsole der Verpackungsmaschine angesteuert werden, wobei bei dieser Variante vornehmlich auf dem Speicher abgelegte Datensätze mittels der Bedienkonsole aktualisiert, ersetzt und/oder ergänzt werden können. Insbesondere als externe Einheit könnte der Speicher mit mehreren Verpackungsmaschinen funktional verbunden sein, wobei die jeweiligen Steuereinheiten der mehreren Verpackungsmaschinen funktionalen Zugriff auf den als externe Einheit ausgeführten Speicher haben können. Dies ist insbesondere dann sinnvoll, wenn mehrere Verpackungsmaschinen parallel zueinander in einer Produktionshalle arbeiten, wobei es nicht unbedingt notwendig ist, dass die jeweiligen Verpackungsmaschinen jeweils mit einem eigenen Speicher ausgestattet sind. Vorstellbar wäre es auch, dass die mehreren Verpackungsmaschinen auf unterschiedliche Datensätze des Speichers zurückgreifen. Dabei wäre es denkbar, dass an den Verpackungsmaschinen unterschiedliche Herstellungsprozesse ablaufen.

Vorzugsweise ist der Speicher mit einem externen Netzwerk funktional verbindbar, wobei der Speicher über das externe Netzwerk aktualisierbar und/oder ansteuerbar ist. Vorstellbar wäre es z.B., dass ein Maschinenbediener von seinem Computerarbeitsplatz aus Datensätze über das externe Netzwerk, in welchem sein Computer funktional eingebunden ist, auf den Speicher spielt. Vorstellbar wäre es auch, dass das externe Netzwerk vom Verpackungsmaschinenhersteller dafür genutzt wird, den Speicher der Verpackungsmaschine anzusteuern, obwohl diese bereits beim Lebensmittelverpacker in die Produktion eingebunden ist. Anhand dieser Variante können beliebige Daten aus dem Speicher ausgelesen werden, beispielsweise auch Fehlermeldungen, Betriebszustände, Produktionsdaten und/oder Serverdaten.

Vorzugsweise umfassen die jeweiligen Messeinrichtungen mindestens einen Kraft-, Druck-, Weg-, Temperatur-, Infrarot-, Ultraschall-, Induktions-, Laser- und/oder Feuchtigkeitssensor. Die jeweiligen Sensoren sind insbesondere integral in den Arbeitseinheiten verbaut, um möglichst genau die daran vorliegenden Ist-Prozesswerte zu erfassen. Vorzugsweise erfassen die eingesetzten Sensoren die jeweiligen Ist-Prozesswerte kontinuierlich während des Betriebs der Verpackungsmaschine, so dass beim Erreichen eines Soll-Prozesswerts schnell von der Steuereinheit reagiert werden kann, um gegebenenfalls den Prozess zu beenden und einen daran anschließenden Prozess zu starten.

Vorzugsweise umfasst zumindest eine der Arbeitseinheiten ein bewegliches Unterteil und ein Oberteil, die dazwischen eine Formkammer oder eine Siegelkammer einschließen und jeweils mindestens eine Druckmesseinheit aufweisen. Damit lassen sich die Druckverläufe innerhalb des Oberteils und Unterteils während dem Herstellungsprozess überwachen. Die Steuereinheit kann dabei in Abhängigkeit der Druckverläufe eine Steuerung der Druckerzeugung durchführen. Ebenfalls könnte die Steuereinheit in Abhängigkeit der Druckverläufe andere Prozesse innerhalb der Formkammer oder der Siegelkammer steuern.

Gemäß einer Ausführungsform ist eine der Arbeitseinheiten der Verpackungsmaschine als Formstation ausgebildet, die mindestens eine Heizplatte umfasst. Diese dient zum Erhitzen eines in die Formstation hinein geführten Folienabschnitts, damit sich dieser anschließend gut verformen lässt. Vorteilhaft ist es, wenn eine Funktion der Heizplatte basierend auf erfassten Druckwerten innerhalb der Formstation steuerbar ist, insbesondere wenn eine Heizzeit der Heizplatte in Abhängigkeit eines erreichten Druckniveaus innerhalb der Formstation aufrufbar ist.

Gemäß einer Variante umfasst die Formstation eine Heizkammer und eine Formkammer, die räumlich getrennt voneinander ausgebildet sind. Die Heizkammer dient dabei als Vorheizung und umfasst vorzugsweise eine untere und eine obere Heizplatte, zwischen welchen ein Folienabschnitt klemmbar ist. Um eine besonders große Klemmkraft zu erzeugen, kann oberhalb der oberen Heizplatte ein Druckerzeuger angeordnet sein, insbesondere eine aufblasbare Membran, der die obere Heizplatte nach unten drücken kann.

Vorstellbar ist es, dass eine der Arbeitseinheiten als Siegelstation ausgebildet ist. Diese kann optional mit einer Begasungseinheit ausgestattet sein, um für das zu versiegelnde Produkt eine gewünschte Atmosphäre zu schaffen.

Bevorzugterweise ist der Ist-Prozesswert ein in der Arbeitseinheit erfasster Druck, wobei die Steuereinheit dazu konfiguriert ist, mindestens einen Arbeitsprozess an der oder an mindestens einer anderen Arbeitseinheit zu beenden oder zu beginnen, wenn der erfasste Druck ein vorbestimmtes Druckniveau erreicht hat. Der Arbeitsprozess kann beispielsweise ein Heiz- oder Abkühlvorgang sein, der gemäß einer aus dem Speicher vorliegenden Heiz- oder Abkühlzeit abläuft.

Die Erfindung betrifft vorzugsweise auch ein Verfahren zur Selbststeuerung eines Programmablaufs eines Prozesses an unterschiedlichen Arbeitseinheiten einer Verpackungsmaschine. Gemäß dem Programmablauf wird ein Prozess und/oder mehrere, funktional aufeinander abgestimmte Prozesse während des Betriebs der Verpackungsmaschine an den jeweiligen Arbeitseinheiten durchgeführt, wobei an den jeweiligen Arbeitseinheiten Ist-Prozesswerte erfasst und an eine Steuereinheit der Verpackungsmaschine weitergeleitet werden, wobei die Steuereinheit die an sie weitergeleiteten Ist-Prozesswerte mit dazugehörigen Soll-Prozesswerten vergleicht und daraus resultierend den jeweiligen Programmablauf für die Arbeitseinheiten selbst und/oder bezüglich der jeweiligen Arbeitseinheiten aufeinander abgestimmt selbststeuernd herstellt und darauf basierend den Betrieb der Verpackungsmaschine koordiniert.

Der Betrieb der Verpackungsmaschine hängt vorzugsweise von den erfassten Ist-Prozesswerten an den jeweiligen Arbeitseinheiten ab. Unter Berücksichtigung von Soll-Prozesswerten für das herzustellende Produkt kann dann ausgehend von den erfassten Ist-Prozesswerten mittels der Steuereinheit bestimmt werden, ob der jeweilige Prozess an einer Arbeitseinheit weiterlaufen bzw. unterbrochen werden kann und gegebenenfalls ein nachfolgender Prozess starten darf. Die Selbststeuerung der Verpackungsmaschine hängt damit einerseits von der an den jeweiligen Arbeitseinheiten integral vorgesehenen Sensorik und andererseits von der rückkoppelnden Steuerfunktion unter Berücksichtigung von Soll-Prozesswerten ab, wobei die Soll-Prozesswerte der Steuereinheit insbesondere von einem mit der Steuereinheit verbundenen Speicher zur Verfügung gestellt werden.

Anhand des erfindungsgemäßen Verfahrens können die jeweiligen Programmabläufe der an den Arbeitseinheiten durchgeführten Prozesse während des Betriebs angesichts der daran gemessenen Ist-Prozesswerte angepasst werden. Die Abfolge der Prozesse ist nicht mehr fest zeitgesteuert, sondern selbststeuernd als Funktion von gemessenen und erreichten Ist-Prozesswerten.

Das Starten eines Prozesses an einer Arbeitseinheit hängt somit bei der Erfindung vornehmlich davon ab, welche Ist-Prozesswerte an dem im Herstellungsprozess vorangelagerten Prozess und/oder mindestens einer zumindest teilweise zeitglich ablaufenden Arbeitseinheit gemessen werden. Vorzugsweise startet der Prozess an einer Arbeitseinheit dann, wenn an einem im Herstellungsprozess vorangelagerten Prozess der oder mindestens einer anderen Arbeitseinheit der oder die erfassten Ist-Prozesswerte den vorgegebenen Soll-Prozesswerten entsprechen. Natürlich kann es auch sein, dass die jeweiligen Prozesse zeitlich gesehen überlappend, gewissermaßen parallel zueinander oder über ein zeitliches Intervall voneinander getrennt ablaufen. Es könnte daher sein, dass der Prozess einer Arbeitseinheit bereits dann gestartet wird, wenn eine oder mehrere bestimmte Ist-Prozessgrößen an dem dieser Arbeitseinheit vorangelagerten Prozess noch nicht die Soll-Prozessgrößen erreicht haben. Dies kann insbesondere zur Vermeidung von Totzeiten führen, wodurch die Taktzykluszeiten verkürzt werden können. Bei zeitlich voneinander beabstandeter Prozesse, die aufeinander folgend ablaufen, wäre es möglich, dass beim Erreichen der Soll-Prozessgröße an einem Prozess einer Arbeitseinheit der nachfolgende Prozess erst dann gestartet wird, wenn ein vorbestimmtes Zeitintervall dazwischenliegt.

Die jeweiligen Prozesse an den Arbeitseinheiten können daher mittels Sensorik und rücckoppelnder Steuerung selbst in ihrem Ablauf optimiert werden, wobei die jeweiligen optimierten Programmabläufe der Prozesse auch für die anderen Prozesse des Verfahrens zur Optimierung dienen, so dass der gesamte Programmablauf des Verfahrens der Verpackungsmaschine in Abhängigkeit der jeweiligen Prozesse zueinander optimiert werden kann.

Ausführungsformen der Erfindung werden anhand der nachfolgend beschriebenen Figuren erläutert. Es zeigen:
- Fig. 1: eine erfindungsgemäße Verpackungsmaschine in allgemeiner schematischer Darstellung,
- Fig. 2: eine Tiefziehverpackungsmaschine gemäß einer Ausführungsform der Erfindung,
- Fig. 3: einen Traysealer gemäß einer Ausführungsform der Erfindung,
- Fig. 4a: eine Formstation gemäß einer Ausführungsform der Erfindung,
- Fig. 4b: ein Prozessdiagramm für die Formstation aus Figur 4a,
- Fig. 5a: eine Formstation gemäß einer anderen Ausführungsform der Erfindung,
- Fig. 5b: ein Prozessdiagramm für die Formstation aus Figur 5a,
- Fig. 6a: eine Siegelstation gemäß einer Ausführungsform der Erfindung,
- Fig. 6b: ein Prozessdiagramm für die Siegelstation aus Figur 6a,
- Fig. 7a: eine bekannte Formstation,
- Fig. 7b: ein zeitgesteuertes Prozessdiagramm für die Formstation aus Figur 7a und
- Fig. 8: eine schematisch beispielhafte Darstellung einer Frühstartfunktion für einen Siegelvorgang.

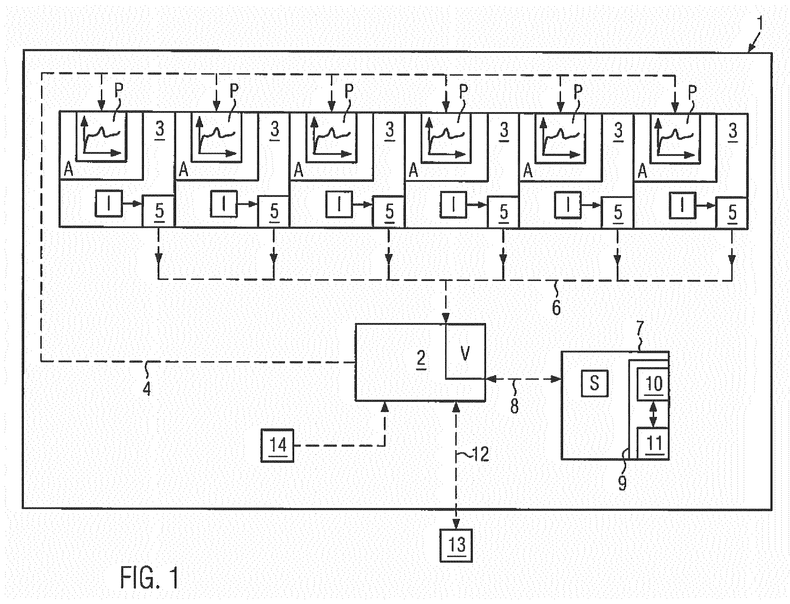

Fig. 1 zeigt in schematischer Darstellung eine erfindungsgemäße Verpackungsmaschine 1. Zur Steuerung des Herstellungsprozesses enthält die Verpackungsmaschine 1 eine Steuereinheit 2. Ferner verfügt die Verpackungsmaschine 1 über eine Vielzahl von Arbeitseinheiten 3, die jeweils mittels einer funktionalen Verbindung 4 mit der Steuereinheit 2 verbunden sind. Bei den Arbeitseinheiten 3 handelt es sich um Arbeitsstationen, die für unterschiedliche Prozesse konfiguriert sind, um dadurch das gewünschte Produkt herzustellen. Während des Herstellungsprozesses laufen die jeweiligen Arbeitseinheiten 3 zueinander koordiniert ab. Dabei können die jeweiligen Arbeitseinheiten 3 sowohl zeitlich gesehen nacheinander und/oder gewissermaßen parallel zueinander, d.h. überlappend zueinander arbeiten.

Die Verpackungsmaschine 1 enthält gemäß Fig. 1 eine Vielzahl von Messeinrichtungen 5, die jeweils in den Arbeitseinheiten 3 verbaut sind. Die Messeinrichtungen 5 sind dazu ausgebildet, Ist-Prozesswerte I an den jeweiligen Arbeitseinheiten 3 zu erfassen. Weiter zeigt Fig. 1, dass die jeweiligen Messeinrichtungen 5 über eine weitere funktionale Verbindung 6 mit der Steuereinheit 2 verbunden sind. Über die weitere funktionale Verbindung 6 können die Messeinrichtungen 5 die erfassten Ist-Prozesswerte I an die Steuereinheit 2 weiterleiten. Damit lassen sich die jeweiligen aktuellen Prozessstati der Arbeitseinheiten 3 während des Herstellungsprozesses mittels der eingesetzten Messeinrichtungen 5 überwachen.

Fig. 1 zeigt auch, dass die Steuereinheit 2 mit einem Speicher 7 verbunden ist. Gemäß Fig. 1 ist der Speicher 7 als Teil der Verpackungsmaschine 1 ausgebildet, wobei er ebenso gut als externe Einheit mit der Steuereinheit 2 der Verpackungsmaschine 1 verbunden sein könnte. Der Speicher 7, der auch eine Datenbank aufweist, ist dazu konfiguriert, Soll-Prozesswerte S zur Verfügung zu stellen. Die Soll-Prozesswerte S hängen insbesondere von spezifischen Daten des herzustellenden Produkts ab. Beispielsweise könnten sich die Soll-Prozesswerte S angesichts einer Foliendicke, einer Folienart, einer Siegelfläche, eines Siegeldrucks, eines zu evakuierenden Endvakuums und/oder eines zu verpackenden Produkts ergeben. Für jedes herzustellende Produkt, das im Wesentlichen aus dem zu verpackenden Produkt sowie der Verpackung dafür besteht, können somit unterschiedliche Soll-Prozesswerte S aus dem Speicher 7 zur Verfügung gestellt werden.

Gemäß Fig. 1 hat die Steuereinheit 2 auf die Soll-Prozesswerte S aus dem Speicher 7 über eine Datenverbindung 8 Zugriff. Insbesondere ist die Datenverbindung 8 für einen bidirektionalen Datenverkehr zwischen der Steuereinheit 2 und dem Speicher 7 ausgebildet.

Ferner zeigt Fig. 1, dass die Steuereinheit 2 dazu ausgebildet ist, durch einen Vergleich V der an sie von den jeweiligen Messeinrichtungen 5 weitergeleiteten Ist-Prozesswerte I mit den dazugehörigen Soll-Prozesswerten S aus dem mit ihr verbundenen Speicher 7 einen Programmablauf P für die jeweiligen Arbeitseinheiten 3 zu generieren. Der Programmablauf P der jeweiligen Arbeitseinheiten 3 ist für an den Arbeitseinheiten 3 ausgebildete Aktoren A vorgesehen. Die Aktoren A verrichten an den jeweiligen Arbeitseinheiten 3 am herzustellenden Produkt eine spezielle Form von Arbeit, beispielsweise Transport, Formgebungs- und/oder Begasungsarbeit.

Basierend auf den erfassten Ist-Prozesswerten I (Weg, Druck, Vakuum, Temperatur, etc.) sowie dem Vergleich dieser mit den Soll-Prozesswerten S aus dem Speicher 7 leitet die Steuereinheit 2 gemäß der Erfindung eine funktionale Rückkopplung ein, um die an den jeweiligen Arbeitseinheiten 3 vorgesehenen Aktoren A selbststeuernd gemäß dem von ihr hergestellten Programmablauf P zu koordinieren. Dabei ist die Steuereinheit 2 dazu konfiguriert, die jeweiligen Programmabläufe P für die jeweiligen Aktoren A der Arbeitseinheiten 3 selbst zu koordinieren und/oder die jeweiligen Programmabläufe P aufeinander abgestimmt selbststeuernd zu steuern, um einen reibungslosen und wirtschaftlichen Betriebsablauf der Verpackungsmaschine 1 zu gewährleisten.

Insbesondere kann die Steuereinheit 2 gemäß einer Ausführungsform der Erfindung dazu konfiguriert sein, den Programmablauf P mindestens einer Arbeitseinheit 3 in Abhängigkeit des Fortschritts eines anderen Programmablaufs mindestens einer anderen Arbeitseinheit 3 zu steuern. Dabei könnte die Steuereinheit 2 dafür sorgen, dass der Programmablauf P mindestens einer Arbeitseinheit 3 dann gestartet wird, wenn an mindestens einer anderen Arbeitseinheit 3 ein vorbestimmter Ist-Prozesswert I erfasst wird. Die jeweiligen Programmabläufe P lassen sich somit gut aufeinander abgestimmt koordinieren, wobei deren Funktion von den jeweiligen erfassten Ist-Prozesswerten an den Arbeitseinheiten 3 sowie der funktionalen Rückkopplung darauf abhängt. Die erfindungsgemäße Verpackungsmaschine 1 ist somit dazu ausgebildet, die jeweiligen an ihr durchgeführten Programmabläufe selbststeuernd zu koordinieren, wobei dies insbesondere in Echtzeit erfolgt, ohne dass dafür besondere Werte oder Abläufe durch einen Maschinenbediener an der Verpackungsmaschine eingestellt werden müssen.

Weiter zeigt Fig. 1, dass der Speicher 7 ein Datenbanksystem 9 enthält, das vorzugsweise mit einer Datenbank 10 sowie mit einer Datenbankverwaltungseinheit 11 ausgestattet ist. In der Datenbank 10 können für die jeweiligen herzustellenden Produkte bestimmte Datensätze abgelegt sein, wobei es sich dabei insbesondere um die jeweiligen Soll-Prozesswerte handelt. Ebenso gut könnte es sein, dass in der Datenbank 10 spezielle Produkteigenschaften abgelegt sind, worauf basierend die Datenbankverwaltungseinheit 11 die Soll-Prozesswerte S herleitet.

Fig. 1 zeigt auch, dass die Steuereinheit 2 funktional über eine drahtlose Datenverbindung 12 mit einem externen Netzwerk 13 verbunden sein kann. Bei dem externen Netzwerk 13 kann es sich um ein Computernetzwerk handeln, von welchem aus die Steuereinheit 2 angesteuert werden kann. Ferner kann die Steuereinheit 2 dazu konfiguriert sein, vom externen Netzwerk 13 aus angesteuert zu werden sowie basierend darauf den Speicher 7 anzusteuern, beispielsweise um die in der Datenbank 10 abgelegten Datensätze zu aktualisieren und/oder zu ergänzen. Optional wäre die Ansteuerung des Speichers 7, insbesondere der darin enthaltenen Datenbank 10, über die Steuereinheit 2 auch mittels einer an der Verpackungsmaschine 15 direkt vorgesehenen Bedienkonsole 14 möglich.

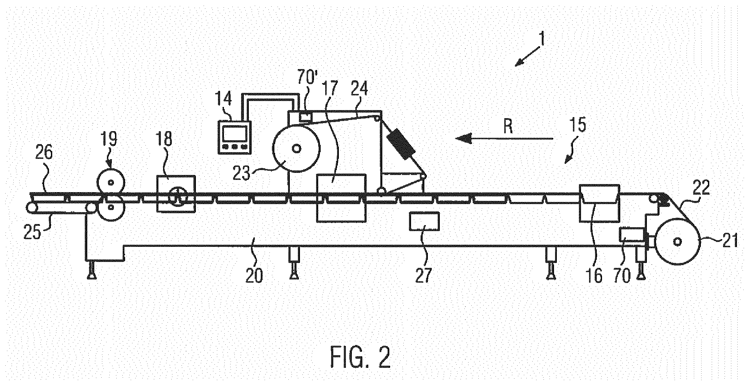

In Fig. 2 ist die erfindungsgemäße Verpackungsmaschine 1 als Tiefziehverpackungsmaschine 15 ausgebildet. Die Tiefziehverpackungsmaschine 15 weist eine Formstation 16, eine Siegelstation 17, eine Querschneidestation 18 sowie eine Längsschneidestation 19 auf, die in dieser Reihenfolge in einer Arbeitsrichtung R an einem Maschinenrahmen 20 angeordnet sind. Eingangsseitig befindet sich an dem Maschinenrahmen 20 eine Zuführrolle 21, von der eine Folienbahn 22 abgezogen wird. Im Bereich der Siegelstation 17 ist ein Materialspeicher 23 vorgesehen, von dem eine Deckelfolie 24 abgezogen wird. Ausgangsseitig ist an der Tiefziehverpackungsmaschine 15 eine Abfuhreinrichtung 25 in Form eines Transportbandes vorgesehen, mit der fertige, vereinzelte Verpackungen 26 abtransportiert werden. Ferner weist die Tiefziehverpackungsmaschine 1 eine schematisch dargestellte Folienvorschubeinrichtung 27 auf, die die Folienbahn 22 ergreift und diese pro Hauptarbeitstakt in der Arbeitsrichtung R weitertransportiert. Die Folienvorschubeinrichtung 27 ist beispielsweise als eine einseitig oder beidseitig an der Folienbahn 22 angeordnete Transportkette ausgeführt. Ferner zeigt Figur 2 ein RFID-Lesegerät 70, 70', das zum Erfassen von Informationen eines nicht gezeigten RFID-Tags, der auf der Unterfolie 22 bzw. der Deckelfolie 24 befestigt ist, konfiguriert ist. Bei den ausgelesenen Informationen handelt es sich insbesondere um Folienspezifikationen.

Das erfinderische Prinzip, welches zuvor im Zusammenhang mit der allgemein dargestellten Verpackungsmaschine 1 aus Fig. 1 beschrieben wurde, lässt sich an der Tiefziehverpackungsmaschine 15 gemäß Fig. 2 anwenden. Ohne darauf beschränkt zu sein, kommen bei der Tiefziehverpackungsmaschine 15 aus Fig. 2 insbesondere die Formstation 16 sowie die Siegelstation 17 als funktional gesteuerte Arbeitseinheiten 3, wie sie im Zusammenhang mit der Verpackungsmaschine 1 aus Fig. 1 erläutert wurden, in Frage.

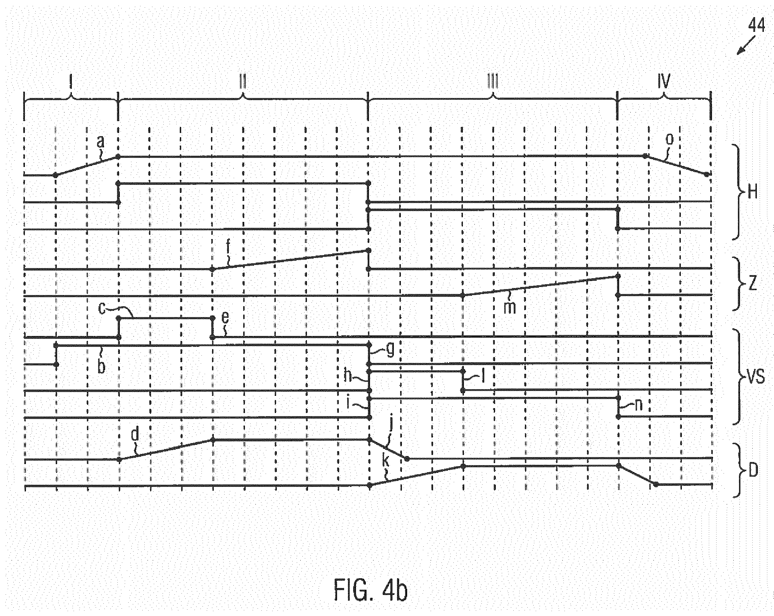

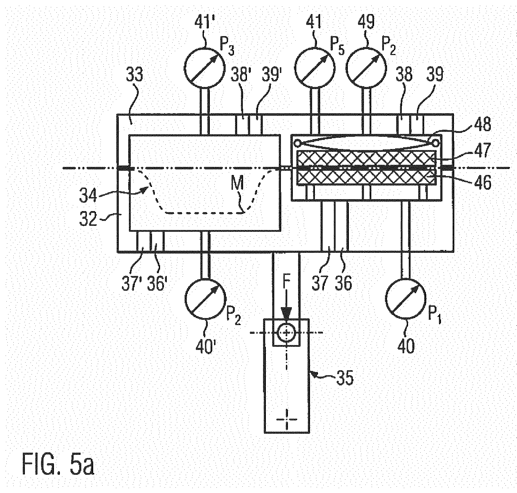

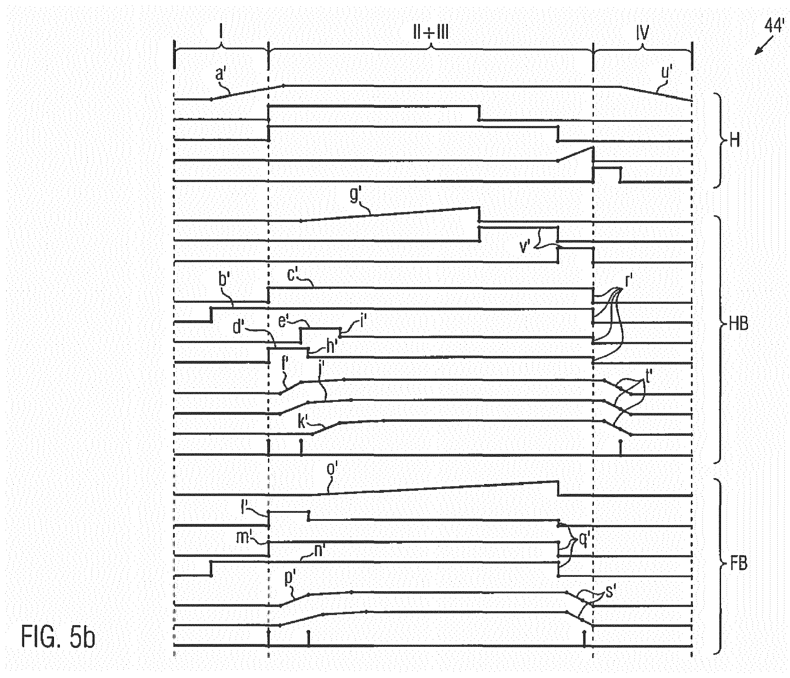

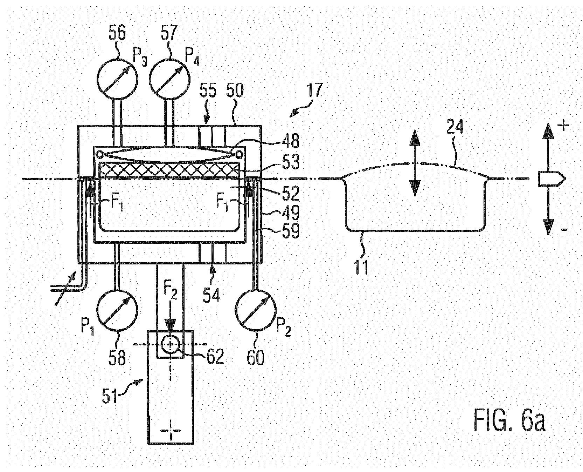

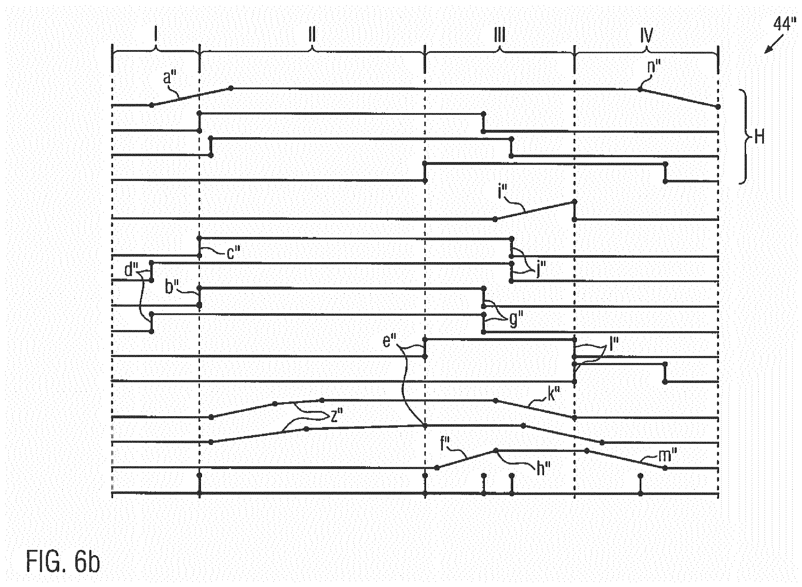

Die Formstation 16 eignet sich besonders gut für eine Prozesssteuerung gemäß der Erfindung. Dies wird im Folgenden anhand unterschiedlicher Ausführungsformen gemäß den Figuren 4a, 4b, 5a und 5b genauer erläutert. Weiter wird im Folgenden in Zusammenhang mit der Figur 6 beschrieben, wie das erfinderische Prinzip an der Siegelstation 17 anwendbar ist. Die Siegelstation 17 für sich betrachtet könnte eine Vielzahl von Arbeitseinheiten 3, beispielsweise ein Siegelwerkzeug, ein Begasungswerkzeug, ein Evakuierungswerkzeug und/oder ein separat dafür vorgesehenen Transportmittel umfassen, die jeweils gemäß selbststeuernder Programmabläufe selbst und/oder in Anpassung zueinander ablaufen. Eine ausführungsgemäße Siegelstation wird später noch in Zusammenhang mit den Figuren 6a und 6b beschrieben.

Gemäß der vorliegenden Erfindung werden daher die in der Tiefziehverpackungsmaschine 15 durchgeführten Prozesse an den jeweiligen Arbeitseinheiten 3 nicht mehr primär zeitgesteuert, sondern vielmehr selbststeuernd, prozessorientiert als Funktion von daran gemessenen und erreichten Ist-Prozesswerten I ablaufen.

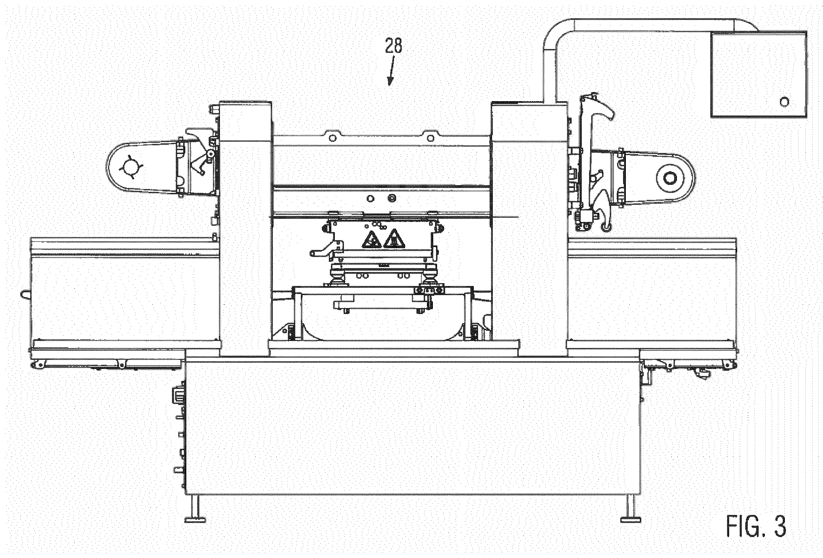

Gemäß Fig. 3 ist die erfindungsgemäße Verpackungsmaschine 1 als Traysealer 28 ausgebildet. Das zuvor im Zusammenhang mit Fig. 1 beschriebene erfinderische Prinzip der selbststeuernden Verpackungsmaschine 1 kann auch an dem Traysealer 28 angewendet werden.

Figur 4a zeigt die Formstation 16 gemäß einer Ausführungsvariante. Die Prozessweise der in Figur 4a gezeigten Formstation 16 ist in Figur 4b abgebildet.

Die Formstation 16 aus Figur 4a umfasst ein Unterteil 32 und ein Oberteil 33. Zwischen dem Unterteil 32 und dem Oberteil 33 ist eine Formkammer 34 zum Ausbilden von Verpackungsmulden M ausgebildet. Das Unterteil 32 ist mit einem Hubwerk 35 verbunden, welches das Unterteil 32 relativ zum Oberteil 33 höhenverstellbar lagert. Im Unterteil 32 sind ein unteres Druckventil 36 und ein unteres (Be-)Entlüftungsventil 37 vorgesehen. Im Oberteil 33 sind ein oberes Druckventil 38 und ein oberes (Be-)Entlüftungsventil 39 vorgesehen.

Figur 4a zeigt auch, dass im Unterteil 32 als Messeinrichtung 5 ein unterer Druckmesser 40 und im Oberteil 33 ein oberer Druckmesser 41 vorgesehen sind. Der untere und der obere Druckmesser 40, 41 sind funktional mit der Steuereinheit 2 der Verpackungsmaschine 1 verbunden.

Außerdem ist gemäß Figur 4a eine Heizplatte 42 innerhalb der Formkammer 34 angeordnet. Unterhalb der Heizplatte 42 ist ein Folienabschnitt 43 positioniert, der zwischen dem Unterteil 32 und dem Oberteil 33 eingeklemmt ist. In der Formkammer 34 wird zunächst der Folienabschnitt 43 mittels der Heizplatte 42 erhitzt und anschließend mittels geeigneter Druckerzeugung und/oder Vakuumerzeugung innerhalb der Formkammer 34 in eine gewünschte Form gebracht, um die Verpackungsmulden M herzustellen. Dies wird genauer anhand Figur 4b beschrieben.

Figur 4b zeigt ein Prozessdiagramm 44 für die erfindungsgemäße prozessgesteuerte Prozessweise der in Figur 4a abgebildeten Formstation 16. Das Prozessdiagramm 44 zeigt in vertikaler Anordnung Hauptprozesse H, Prozesszeiten Z, einen Ventilsteuerablauf VS und Druckverläufe D, die an der Formstation 16 zur Herstellung von Verpackungsmulden M prozessgesteuert zueinander ablaufen. In horizontaler Anordnung ist das Prozessdiagramm 44 in Prozessblöcke I bis IV zeitlich unterteilt.

Im Prozessblock I schließt die Formstation 16 den Folienabschnitt 43 zwischen dem Unterteil 32 und dem Oberteil 33 ein. Das Hubwerk 35 verfährt dazu das Unterteil 32 relativ zum Oberteil 33 aus einer geöffneten Stellung in eine geschlossene Stellung (Schritt a). Das untere Entlüftungsventil 37 wird in eine geschlossene Position gebracht (Schritt b).

Im Prozessblock II ist die Formstation 16 geschlossen. Der Prozessblock II umfasst das Aufheizen des eingeklemmten Folienabschnitts 43, um diesen anschließend leichter zu verformen. Im Unterteil 32 wird zunächst ein Druck erzeugt, wodurch der Folienabschnitt 43 gegen die Heizplatte 42 gedrückt wird (Schritt c). Der Druckanstieg im Unterteil 32 wird dabei mittels des unteren Druckmessers 40 überwacht (Schritt d).

Weiter wird im Prozessblock II die Druckzuführung im Unterteil 32 unterbrochen (Schritt e) und ein Beheizen der Heizplatte 43 entsprechend einer Heizzeit gestartet (Schritt f), wenn der Druck im Unterteil 32 einen Sollwert (Soll-Prozesswert) erreicht hat. Der Folienabschnitt 43 liegt nun faltenfrei an der Unterseite der Heizplatte 42 an und kann zügig erhitzt werden. Das Druckniveau bleibt dabei im Unterteil 32 während der Heizzeit erhalten.

Am Ende des Prozessblocks II bzw. zu Beginn des Prozessblocks III, d.h. nach Ablauf der Heizzeit, öffnet das untere Entlüftungsventil 37 (Schritt g). Außerdem öffnet das obere Druckventil 28 (Schritt h) und schließt das obere Entlüftungsventil 39 (Schritt i). Im Prozessblock III wird nun der erhitzte Folienabschnitt 43 geformt. Dabei wird der Folienabschnitt 43 in das Unterteil 32 gedrückt und zu einer Verpackungsmulde M ausgebildet.

Im Prozessblock III wird der im Oberteil 33 erzeugte Druckanstieg überwacht (Schritt k). Während der Druck im Unterteil 32 sinkt (Schritt j), nimmt der Druck im Oberteil 33 bis zu einem Schwellwert (Soll-Prozesswert) zu (Schritt k). Mit dem Erreichen des Schwelldrucks im Oberteil 33 wird die Druckerzeugung im Oberteil 33 unterbrochen (Schritt I) und eine Stabilisierungszeit (Abkühlzeit) gestartet (Schritt m). Während der Stabilisierungszeit wird das Druckniveau im Oberteil 33 gehalten, damit die erzeugte Verpackungsmulde M ihre Form behält. Am Ende der Stabilisierungszeit ist der Formvorgang gemäß dem Prozessblock III beendet. Die Verpackungsmulde M ist nun ausgehärtet.

Zu Beginn des Prozessblocks IV öffnet das obere Entlüftungsventil 39 (Schritt n). Dadurch sinkt das Druckniveau im Oberteil 33. Ab einem vorbestimmten Druckschwellwert (Soll-Prozesswert) im Oberteil 33 öffnet das Hubwerk 35 die Formstation 16 (Schritt o). Die geformte Verpackungsmulde M kann jetzt aus der Formkammer 34 heraus gefördert werden, wobei gleichzeitig ein neuer, zu formender Folienabschnitt 43 in die Formstation 16 nachrückt.

Je nach verwendetem Folientyp und/oder Werkzeugtyp können die im oben beschriebenen Beispiel, in den Prozessblöcken II und III erwähnten Schwelldruckwerte variieren. Die Steuereinheit 2 ist vorzugsweise dazu konfiguriert, die jeweiligen Schwelldruckwerte als Soll-Prozesswerte automatisch aus dem Speicher 7, insbesondere mittels der Datenbank 10 zu generieren. Weiter kann die Steuereinheit die Heiz- und Stabilisierungszeit (Schritte f und m) mindestens hinsichtlich des Folienmaterials und/oder des Werkzeugtypen variieren.

Figur 5a zeigt die Formstation 16 gemäß einer anderen Ausführungsvariante. Die Prozessweise der in Figur 5a gezeigten Formstation 16 ist in Figur 5b abgebildet.

Die Formstation 16 aus der Figur 5a umfasst eine separate Heizkammer 45, die als Vorheizung betrieben wird. Die Heizkammer 45 ist in Prozessrichtung gesehen vor der Formkammer 34 angeordnet. Innerhalb der Heizkammer 45 sind eine untere und eine obere Heizplatte 46, 47 vorgesehen. Zwischen diesen ist der zu erwärmende Folienabschnitt 43 durchgeführt. Oberhalb der oberen Heizplatte 47 ist ein Druckerzeuger 48, insbesondere eine aufblasbare Membran, angeordnet, der im aufgeblasenen Zustand die obere Heizplatte 47 gegen die untere Heizplatte 46 drückt.

Weiter sind die Heizkammer 45 und die Formkammer 34 jeweils mit unteren und oberen Druck- und Entlüftungsventilen 36, 36', 37, 37', 38, 38', 39, 39' ausgestattet. Die anliegenden Drücke werden in der Heizkammer 45 und der Formkammer 34 jeweils mittels unteren und oberen Druckmesser 40, 40', 41, 41' erfasst. Ein im Druckerzeuger 48 anliegender Druck wird mittels eines Druckerzeugermessers 49 ermittelt.

Figur 5a zeigt, dass die Heizkammer 45 sowie die Formkammer 34 gleichzeitig geöffnet oder geschlossen werden können, wenn das Unterteil 32 mittels des Hubwerks 35 verstellt wird. Vorstellbar wäre auch, das Unterteil 32 zweigeteilt auszubilden, wobei die jeweiligen Teile des Unterteils 32 getrennt voneinander mittels eigens dafür vorgesehener Hubwerke 35 verstellbar sind.

Figur 5b zeigt ein Prozessdiagramm für die in Figur 5a abgebildete Formstation 16. In der Doppelkammerausführung der Formstation 16 laufen das Aufheizen sowie das Formen zeitlich parallel zueinander ab. Die Prozesse aus den Prozessblöcken II und III laufen daher nicht zeitlich nacheinander ab. Zur besseren Verständlichkeit wird im Folgenden jedoch das Aufheizen und das Formen getrennt zueinander beschrieben.

Das Prozessdiagramm 44' zeigt in einem Heizfunktionsblock HB Arbeitsprozesse, die in der Heizkammer 45, und in einem Formfunktionsblock FB Arbeitsprozesse, die in der Formkammer 34 ablaufen.

Zunächst wird im Prozessblock I die Formstation 16 geschlossen (Schritt a'). Das Hubwerk 35 hebt dabei das Unterteil 32 an, wodurch die Heizkammer 45 und die Formkammer 34 schließen. Der Heizfunktionsblock HB zeigt, dass das untere Entlüftungsventil 37 geschlossen ist (Schritt b'). Außerdem zeigt der Heizfunktionsblock HB, dass durch das untere Druckventil 36 ein Vakuum in der Heizkammer 45 im Unterteil 32 erzeugt wird, um den Folienabschnitt 43 auf die untere Heizplatte 46 zu ziehen (Schritt c'). Ebenso wird ein Druck im Oberteil 33 der Heizkammer 45 angelegt, der allerdings optional ist. Dazu öffnet das obere Druckventil 38 (Schritt d'). Zusätzlich drückt der Druckerzeuger 48 auf die obere Heizplatte 47, wodurch der Folienabschnitt 43 fest zwischen der unteren und der oberen Heizplatte 46, 47 eingeklemmt wird (Schritt e'). Insbesondere können dabei zur präzisen Druckerzeugung in dem Oberteil 33 der Heizkammer 45 Proportionalregelventile verwendet werden.

Der Heizfunktionsblock HB zeigt auch, dass eine Druckreaktion innerhalb der Heizkammer 45 zeitlich verspätet relativ zu den Schaltprozessen an den Druckventilen (Schritt c' und d') einsetzt (Totzeit). Dies wird beim Steuerungsprozess der Formstation 16 berücksichtigt. Anhand einer solchen Totzeitregelung können die Ventilschaltprozesse (Schritt c' und d') vorzeitig, beispielsweise 100ms, bereits dann angesteuert werden, wenn sich die Formstation 16 noch nicht in der geschlossenen Position befindet (siehe Schritt a'). Dies geschieht beispielsweise mittels einer Wegmesseinheit für das Hubwerk 35, wobei die Wegmesseinheit ab einem bestimmten Schließweg des Hubwerks 35 ein Signal an die Steuereinheit gibt, damit diese die entsprechenden Ventile frühzeitig ansteuert.

Im Heizfunktionsblock HB werden zu Beginn die jeweiligen Drücke in der Heizkammer 45 überwacht. Sobald im Unterteil 32 vom Druckmesser 40 ein vorbestimmtes Druckniveau erfasst wird (Schritt f'), setzt die Steuereinheit 2 einen Heizvorgang an der unteren Heizplatte 46 in Gang (Schritt g'). Die Drücke im Oberteil 33 können während dem Heizvorgang beliebig geregelt werden. Insbesondere werden die Drücke im Oberteil 33 ab Erreichen eines vorbestimmte Drucks innerhalb des Oberteils 33 und/oder innerhalb des Druckerzeugers 48 auf ein vorbestimmtes Druckniveau gesenkt (Schritte h' und i').

Weiter wird gezeigt, dass das Vakuum im Unterteil 32 und der Druck im Oberteil 33 nahezu zeitgleich steigen (Schritt f' und j'). Der zusätzlich aufgebrachte Druck mittels des Druckerzeugers 48 steigt verzögert an (Schritt k'), erst nachdem das Druckniveau im Oberteil 33 und/oder das Vakuumniveau im Unterteil 32 jeweils einen vorbestimmten Wert angenommen haben.

Im Formfunktionsblock FB werden das untere und/oder obere Druckventil 36', 38' wie das untere und/oder obere Druckventil 36, 38 der Heizkammer 45 frühzeitig gemäß der Totzeitregelung frühzeitig, beispielsweise 100ms bevor die Formstation 16 geschlossen ist, angesteuert (Schritt l' und m'). Der Druckanstieg im Oberteil 33 und/oder die Vakuumbildung im Unterteil 32 werden von den Druckmessern 40', 41' überwacht. Das untere Entlüftungsventil 37' bleibt während des Formvorgangs geschlossenen (Schritt n').

Ab einem vorbestimmten Druck im Oberteil 33 und/oder Vakuum im Unterteil 32 fängt die Stabilisierungszeit an zu laufen (Schritt o'). Diese kann insbesondere auch während des Druck- und/oder Vakuumaufbaus in Gang gesetzt werden (Schritt p'). Während der Stabilisierungszeit kühlt die geformte Verpackungsmulde M ab, wodurch sie formstabil wird.

Figur 5b zeigt, dass die Heizzeit in der Heizkammer 45 kürzer ist als die Stabilisierungszeit in der Formkammer 34. Dennoch wird die Formkammer 34 früher belüftet als die Heizkammer 45 (Schritte q' und r'). Während die Formkammer 34 mit Ablauf der Stabilisierungszeit sofort eine Belüftung einleitet (Schritt q') werden die jeweiligen Ventile 36, 37, 38, 39 der Heizkammer 45 erst dann belüftet, wenn der Druck und/oder das Vakuum in der Formkammer 34 abgebaut ist (Schritt s'). Mit einer gewissen zeitlichen Verzögerung werden dann auch die Drücke in der Heizkammer 45 abgebaut (Schritt t').

Sobald das Druckniveau in der Formkammer 34 und in der Heizkammer 45 einen vorbestimmten Wert gemeinsam erreicht und/oder unterschritten haben, fährt das Hubwerk 35 nach unten und öffnet die Formstation 16 (Schritt u'). Gemäß der Figur 5b hätte die Formstation 34 bereits zu einem früheren Zeitpunkt geöffnet werden können (Schritt s'). Deshalb wäre es auch vorstellbar, voneinander getrennt funktionierende Hubwerke 35 an der Heizkammer 45 und an der Formkammer 34 einzusetzen. Dadurch ließen sich Wartezeiten reduzieren (Schritt v'). Alternativ könnte die Steuereinheit 2 das Belüften der jeweiligen Ventile an der Heizkammer 45 und an der Formkammer 34 derart zeitlich aufeinander abstimmen, dass sich innerhalb der Heizkammer 45 und der Formkammer 34 bestenfalls zeitgleich ein vorbestimmtes Druckniveau zum Öffnen der Formstation 16 einstellt. Im Falle der Figur 5b könnte beispielsweise das Belüften der Heizkammer 45 (Schritt r') früher eingeleitet werden, um den Druckabbau (Schritte t' und s') zeitlich näher zusammen zu bringen.

Figur 6a zeigt die Siegelstation 17 aus Figur 2 in vergrößerter Darstellung. Das erfindungsgemäße prozessgesteuerte Funktionsprinzip kann auch an dieser Siegelstation 17 angewendet werden.

In einer weiteren nicht näher dargestellten Variante ist ein Formstempel für die Formkammer 34 vorgesehen. Gemäß dem Stand der Technik wurde die Stempelbewegung nach unten gestartet und zeitgesteuert mit etwas Verzögerung der Formprozess gestartet. Bei der erfindungsgemäßen Variante wird die Stempelbewegung gestartet und der Formprozess auch gestartet, sobald der Formstempel eine vorgegebene Position erreicht hat.

In Figur 6a umfasst die Siegelstation 17 ein Siegelunterteil 49 und ein Siegeloberteil 50. Das Siegelunterteil 49 ist mittels eines Hubwerks 51 höhenverstellbar. Zwischen dem Siegelunterteil 49 und dem Siegeloberteil 50 ist eine Siegelkammer 52 ausgebildet. In der Siegelkammer wird die Deckelfolie 24 auf die Verpackungsmulde M gesiegelt, um darin ein (Lebensmittel-) Produkt einzuschließen. Oberhalb der Deckelfolie 24 ist eine Siegelplatte 53 positioniert. Ferner ist innerhalb des Siegeloberteils 50 ein Druckerzeuger 48, beispielsweise eine aufblasbare Membran, vorgesehen, der zum Niederdrücken der Siegelplatte 53 einsetzbar ist, um die Deckelfolie 24 auf der Verpackungsmulde M zu versiegeln.

Das Siegelunterteil 49 umfasst eine untere Ventileinheit 54 zum Erzeugen eines Vakuums und zum Belüften des Siegelunterteils 49. Das Siegeloberteil 50 umfasst eine obere Ventileinheit 55 zum Erzeugen eines Vakuums und zum Belüften des Siegeloberteils 50.

Das Siegeloberteil 50 ist mit einem oberen Druckmesser 56 ausgestattet. Der Druck im oberen Druckerzeuger 48 wird mittels eines Druckerzeugermessers 57 gemessen. Das Siegelunterteil 49 ist mit einem unteren Druckmesser 58 ausgestattet. Außerdem ist im Siegelunterteil 49 ein Vakuumerzeuger 59 ausgebildet, der in der Verpackungsmulde M ein Vakuum erzeugen kann. Den erzeugten Unterdruck in der Verpackungsmulde M misst ein Vakuummesser 60. Zum Begasen der Verpackungsmulde M mit einem beliebigen Atmosphärengas kann im Siegelunterteil 49 eine Begasungseinheit 61 vorgesehen sein.

Figur 6b zeigt die funktionalen Zusammenhänge an der Siegelstation 17 aus Figur 6a. Der Siegelprozess 44" läuft dabei erfindungsgemäß prozessgesteuert ab.

Zunächst wird im Prozessblock I der Figur 6b das Siegelunterteil 49 mittels des Hubwerks 51 aus einer offen in eine geschlossene Position bewegt, in welcher das Siegelunterteil 49 mit dem Siegeloberteil 50 die Verpackungsmulde M und die darüber positionierte Deckelfolie 24 innerhalb der Siegelkammer 52 einsperrt (Schritt a").

Bevor das Siegelunterteil 49 in der geschlossenen Position ankommt, wird die untere Ventileinheit 54 zum Evakuieren des Siegelunterteils 49 angesteuert (Schritt b"). Mit geringer Verzögerung, jedoch noch vor dem Erreichen einer geschlossenen Lage des Siegelunterteils 49 wird die obere Ventileinheit 55 zum Evakuieren des Siegeloberteils 50 angesteuert (Schritt c"). Der zeitliche Vorlauf zum Ansteuern der Ventileinheiten 54, 55 dient zum Eliminieren von Totzeiten, die sich ab Ansteuerung bis zur Ventilreaktion und weiter bis zum tatsächlichen Druck- oder Vakuumaufbau summieren. Diese Totzeiten können von der Steuereinheit 2 in einem Probelauf bestimmt werden.

Im Prozessblock I bleiben zum Aufbau eines Vakuums sowohl im Siegelunterteil 49 als auch im Siegeloberteil 50 die Ventileinheiten 54, 55 für eine Belüftung geschlossen (Schritt d"). Mit gewissem zeitlichem Verzug wird zu Beginn des Prozessblocks II im Siegelunterteil 49 sowie im Siegeloberteil 50 ein Vakuum aufgebaut. Durch das erzeugte Vakuum im Siegelunterteil 49 wird zunächst die Verpackungsmulde M fixiert. Das Vakuum im Siegeloberteil 50 sorgt dafür, dass die Deckelfolie 24 faltenfrei über der Verpackungsmulde M ausgerichtet ist.

Außerdem werden die Vakuumdruckverläufe innerhalb des Siegelunterteils 49 und des Siegeloberteils 50 überwacht (Schritt z"). Im Prozessblock II wird solange im Siegelunterteil 49 und/oder im Siegeloberteil 50 ein Vakuum erzeugt, bis ein vorbestimmter Vakuumwert im Siegelunterteil 49 und/oder im Siegeloberteil 50 erfasst wird (Schritt e").

In einer weiteren Variante ist ein nicht näher dargestellter Feuchtigkeitssensor vorgesehen, um den Feuchtigkeitsgrad im Vakuum für das Produkt zu erfassen. Es kann vorkommen, dass ein vorgegebenes Endvakuum nicht erreicht werden kann, da das Produkt zu viel Feuchtigkeit erzeugt. In diesem Fall erkennt dies die Steuerung und beendet diesen Prozessschritt, obwohl das Endvakuum, nämlich der vorbestimmte Vakuumwert, noch nicht erreicht wurde.

Gemäß Figur 6b wird am Ende im Prozessblock II ein vorbestimmter Vakuumdruck im Siegeloberteil 50 erreicht, der ein Aufblähen des Druckerzeugers 48 in Gang setzt, wodurch die Siegelplatte 53 nach unten gedrückt wird und die Deckelfolie 24 auf den Rand der Verpackungsmulde M presst. Dabei baut sich im Siegelbereich ein Anpressdruck auf (Schritt f"). Dieser mechanische Anpressdruck kann mittels mindestens eines Kraftsensors 62 (siehe Figur 6a), der in dem Siegelunterteil 49 und/oder im damit verbundenen Hubwerk 51 vorgesehen ist, gemessen werden. Alternativ kann auch mittels eines Drucksensors der Druck einer Membrane ermittelt werden, die die Siegelkraft erzeugt.

Kurze Zeit später, wenn der Anpressdruck gleich einem maximalen Siegeldruck ist (Schritt h") wird eine Siegelzeit in Gang gesetzt (Schritt i"), während welcher die Deckelfolie 24 mit der Verpackungsmulde M verschweißt wird. Die Siegelzeit kann in Abhängigkeit der verwendeten Verpackungsmaterialien und/oder des verwendeten Siegelwerkzeugtyps festgelegt sein.

Während der Siegelzeit, mit zeitlicher Verzögerung zum Belüften des Siegelunterteils 49, wird auch das Siegeloberteil belüftet (Schritt j"). Als auslösendes Ereignis dafür kann insbesondere das Zurückgehen des Vakuums im Siegelunterteil 49 auf einen bestimmten Vakuumwert dienen (Schritt k").

Bis zum Ablauf der Siegelzeit im Prozessblock III bleibt die Siegelplatte 53 niedergedrückt. Sobald die Siegelzeit abgelaufen ist, wird die Siegelplatte 53 angehoben (Schritt I"). Dafür wird der Druck aus dem Druckerzeuger 48 abgelassen und überwacht (Schritt m"), wodurch die Siegelplatte 53 in eine Ausgangslage zurückbewegt werden kann. Sobald der Druck im Druckerzeuger 48 einen vorbestimmten Wert erreicht, kann im Prozessblock IV die Siegelstation 17 geöffnet werden (Schritt n"). Das Öffnen der Siegelstation 17 kann bereits dann eingeleitet werden, wenn die Siegelplatte 53 noch nicht ganz ihre Ausgangslage erreicht hat, d.h. der Druck im Druckerzeuger 48 noch nicht komplett abgebaut ist. Das Vakuum im Siegelunterteil 49 und im Siegeloberteil 50 ist bei diesem Zeitpunkt bereits vollständig durch das Belüften abgebaut.

Die Erfindung wendet sich von einer zeitlich basierten Steuerung des Herstellungsprozesses an einer Verpackungsmaschine ab. Zeitgesteuerte Programmabläufe werden gemäß der Erfindung beim Herstellungsprozess nicht mehr primär berücksichtigt. Vielmehr greift die erfindungsgemäße Verpackungsmaschine mittels der Steuereinheit 2 selbststeuernd basierend auf aktuellen erfassten Prozessparametern in den Herstellungsprozess ein, um die jeweiligen an den Arbeitseinheiten 3 durchgeführten Programmabläufe P selbst und/oder in Abstimmung zueinander selbststeuernd zu koordinieren. Dies führt zu einem wirtschaftlichen Herstellungsprozess, wobei sich die erfindungsgemäße Verpackungsmaschine 1 insbesondere durch eine hohe Verfügbarkeit zur Herstellung einer Vielzahl unterschiedlicher Produkte eignet.

Als weitere Ausführungsform ist denkbar, dass Informationen und/oder Spezifikationen von Verbrauchsmaterialien, wie die Folienbahn 22 und die Deckelfolie 24, beispielsweise mittels RFID automatisch erfasst und durch die Steuerung verarbeitet werden. Dabei können RFID Leseeinheiten 70, 70' einen auf der Folienrolle angebrachten RFID-Tag auslesen.

Form- oder Siegelwerkzeuge können vorzugsweise drahtgebunden oder drahtlos mittels RFID automatisch erkannt, identifiziert und/oder die darauf enthaltenen Informationen ausgelesen und in die Steuerung übertragen werden.

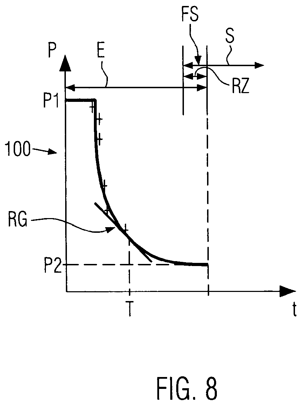

Figur 8 zeigt anhand eines Druck-Zeit-Diagramms 100 einen Druckverlauf p über eine Zeit t innerhalb der Siegelstation 17 während eines Evakuierungsvorgangs E, der als erster Funktionsvorgang an der Siegelstation 17 abläuft, wobei ein Siegelvorgang S, der als zweiter Funktionsvorgang an der Siegelstation 17 abläuft, per Frühstart FS gestartet wird, d.h. bevor der Evakuierungsvorgang E innerhalb der Siegelkammer 52, insbesondere innerhalb der zu versiegelnden Verpackung des herzustellenden Produkts, von einem Startdruck P1 auf einen Solldruck P2 gefallen ist.

In Figur 8 wird anhand mehrerer schematisch dargestellter Messpunkte eine als vorgegebene mathematische Funktion vorhersehbare Exponentialfunktion approximiert, welche den zu erwartenden Druckverlauf darstellt. Anhand des approximierten Druckverlaufs kann ein sollwertiges Ende des Evakuierungsvorgangs bestimmt werden, worauf basierend der zweite Funktionsvorgang per Frühstart gestartet werden kann.

Figur 8 zeigt eine Steigung (Änderungsrate) des Druckverlaufs zum Zeitpunkt T, die vorzugsweise durch die Steigung einer Regressionsgeraden RG festgelegt ist und mittels der Steuereinheit 2 innerhalb eines vorbestimmten Messintervalls berechenbar ist. Basierend auf der Steigung der Regressionsgeraden RG kann die Steuereinheit 2 anhand einer davon abgeleiteten Änderungsgeschwindigkeit eine Restlaufzeit für den Evakuierungsvorgang E bestimmen.

Ferner zeigt Figur 8, dass der Siegelvorgang S per Frühstart FS beginnt, bevor der Evakuierungsvorgang E sollwertig ist, d.h. bevor innerhalb der Siegelstation 17 der Solldruck P2 erreicht ist. Der Frühstart FS läuft gemäß Figur 8 hinsichtlich einer Reaktionszeit RZ eines für den Siegelvorgang verwendeten Stellglieds, beispielsweise hinsichtlich einer Reaktionszeit eines Ventils einer für den Siegelvorgang S eingesetzten Druckmembrane ab.

Das Prinzip der Frühstartfunktion gemäß Figur 8 kann für unterschiedliche Funktionsvorgänge der Verpackungsmaschine 1 an einer oder mehreren Arbeitseinheiten angewendet werden. Insbesondere ist es auch vorstellbar, dass die Steuereinheit arbeitseinheitenübergreifend zwischen jeweiligen Arbeitseinheiten Funktionsvorgänge aufeinander abgestimmt per Frühstartfunktion ansteuert, beispielsweise eine Vorschubansteuerung per Frühstart angesteuert wird, bevor andere Funktionsvorgänge sollwertig abgeschlossen sind.

## Patentansprüche

1. Verpackungsmaschine (1), die eine Steuereinheit (2), mehrere Messeinrichtungen (5) sowie mehrere Arbeitseinheiten (3) für unterschiedliche Prozesse umfasst, wobei die Steuereinheit (2) mit den Arbeitseinheiten (3) sowie mit den Messeinrichtungen (5) funktional verbunden ist,
wobei die Messeinrichtungen (5) dazu konfiguriert sind, Ist-Prozesswerte (I) an den jeweiligen Arbeitseinheiten (3) zu erfassen und an die Steuereinheit (2) weiterzuleiten, um einen Prozessstatus an den jeweiligen Arbeitseinheiten (3) zu überwachen,
wobei die Steuereinheit (2) dazu ausgebildet ist, durch einen Vergleich (V) der an sie von den jeweiligen Messeinrichtungen (5) weitergeleiteten Ist-Prozesswerte (I) mit dazugehörigen Soll-Prozesswerten (S) aus einem mit ihr verbundenen Speicher (7) einen Programmablauf (P) für die jeweiligen Arbeitseinheiten (3) selbst und/oder bezüglich der Arbeitseinheiten (3) aufeinander abgestimmt selbststeuernd herzustellen, gemäß welchem die jeweiligen Arbeitseinheiten (3) in Abhängigkeit der daran erfassten Ist-Prozesswerte (I) selbst und/oder aufeinander abgestimmt funktionieren,
wobei ein Arbeitstakt an der Verpackungsmaschine (1) mindestens einen ersten Funktionsvorgang und einen zweiten Funktionsvorgang an einer oder an unterschiedlichen Arbeitseinheiten (3) umfasst, wobei der zweite Funktionsvorgang später beginnt als der erste Funktionsvorgang,
wobei die Steuereinheit (2) dazu ausgebildet ist, einen Frühstart für den zweiten Funktionsvorgang einer Arbeitseinheit (3) durchzuführen, wenn ein Ist-Prozesswert des vorangehenden ersten Funktionsvorgangs des Programmablaufs (P) der oder einer anderen Arbeitseinheit (3) noch nicht den jeweiligen Soll-Prozesswert (S) erreicht hat, und
wobei die Steuereinheit (2) dazu ausgebildet ist, den Frühstart basierend auf einer vorbestimmten Reaktionszeit der Arbeitseinheit (3) für den zweiten Funktionsvorgang des Programmablaufs (P) der Arbeitseinheit (3) durchzuführen,
**dadurch gekennzeichnet, dass**
die Steuereinheit (2) dazu ausgebildet ist, den Frühstart des zweiten Funktionsvorgangs basierend auf einem Näherungsverfahren zur Vorbestimmung des zeitlichen Endes des ersten Funktionsvorgangs mittels einer an der Arbeitseinheit (3) mittels einer der Messeinrichtungen (5) erfassten zeitabhängigen Messgröße des ersten Funktionsvorgangs anzusteuern, und
dass die Steuereinheit (2) dazu ausgebildet ist, basierend auf dem Näherungsverfahren eine verbleibende Restlaufzeit des vorangehenden ersten Funktionsablaufs zu bestimmen, welche die Dauer angibt, bis die Messgröße den Soll-Prozesswert (S) erreicht, wobei die Steuereinheit (2) ferner dazu ausgebildet ist, den Frühstart durchzuführen, wenn die Restlaufzeit kleiner oder gleich der vorbestimmten Reaktionszeit (R) ist.

2. Verpackungsmaschine nach Anspruch 1, **dadurch gekennzeichnet, dass** mittels des Näherungsverfahrens eine prozessabhängige Änderungsrate einer an der Arbeitseinheit (3) mittels einer der Messeinrichtungen (5) erfassten zeitabhängigen Messgröße des ersten Funktionsvorgangs bestimmbar ist oder eine Anpassung an eine vorgegebene mathematische Funktion durchführbar ist.

3. Verpackungsmaschine nach Anspruch 2, **dadurch gekennzeichnet, dass** für die Steuereinheit (2) ein Schwellenwert für die Änderungsrate hinterlegt ist, wobei die Steuereinheit (2) dazu ausgebildet ist, eine Berechnung der Restlaufzeit zu starten, wenn die Änderungsrate dem Schwellenwert entspricht oder kleiner als der Schwellenwert ist.

4. Verpackungsmaschine nach Anspruch 3, **dadurch gekennzeichnet, dass** die Steuereinheit (2) dazu ausgebildet ist, den Schwellenwert anhand einer Trendregelung zu bestimmen.

5. Verpackungsmaschine nach Anspruch 4, **dadurch gekennzeichnet, dass** die Steuereinheit (2) dazu ausgebildet ist, den Schwellenwert schrittweise solange zu erhöhen oder herabzusetzen, bis mindestens einmal die berechnete Restlaufzeit größer als die vorbestimmte Reaktionszeit (R) ist.

6. Verpackungsmaschine nach Anspruch 5, **dadurch gekennzeichnet, dass** die Steuereinheit (2) zur Festlegung der Bedingung mit einem Ringpuffer verbunden ist.

7. Verpackungsmaschine nach einem der vorangehenden Ansprüche, **dadurch gekennzeichnet, dass** die Steuereinheit (2) dazu ausgebildet ist, eine Berechnung der Restlaufzeit solange fortlaufend durchzuführen und den Frühstart zu verzögern, bis die berechnete Restlaufzeit kleiner oder gleich der vorbestimmten Reaktionszeit (R) ist.

8. Verpackungsmaschine nach einem der vorigen Ansprüche 2 bis 7, **dadurch gekennzeichnet, dass** die Messgröße ein an der Arbeitseinheit (3) anliegender Druck (P) ist, welcher mittels eines an der Arbeitseinheit (3) ausgebildeten und mit der Steuereinheit (2) funktional verbundenen Drucksensors erfassbar ist, und die mittels der Steuereinheit (2) errechenbare Änderungsrate eine Änderungsgeschwindigkeit des erfassten Drucks (P) festlegt.

9. Verpackungsmaschine nach einem der vorigen Ansprüche, **dadurch gekennzeichnet, dass** die Steuereinheit (2) dazu ausgebildet ist, zyklisch bei jedem Funktionsvorgang die Reaktionszeit zu bestimmen und anhand einer Mittelwertbildung aus einer vorbestimmten Anzahl erfasster Reaktionszeiten eine gemittelte Reaktionszeit zu berechnen, bezüglich welcher der Frühstart des zweiten Funktionsvorgangs ausführbar ist.

10. Verpackungsmaschine nach Anspruch 9, **dadurch gekennzeichnet, dass** die Steuereinheit (2) eine Notfallsteuerung für den Betrieb der Verpackungsmaschine (1) umfasst, wobei die Steuereinheit (2) dazu ausgebildet ist, die prozessdatenbasierte Steuerung der Verpackungsmaschine (1) durch eine zeitbasierte Steuerung zu ersetzen, wenn eine vorbestimmte Anzahl berechneter Reaktionszeiten während des Betriebs der Verpackungsmaschine (1) einen Funktionsschwellenwert erreicht oder diesen übertrifft.

11. Verpackungsmaschine nach einem der vorigen Ansprüche, **dadurch gekennzeichnet, dass** die Verpackungsmaschine (1) eine Tiefziehverpackungsmaschine (15), ein Traysealer (28) oder eine Kammerbandmaschine (29) ist.

12. Verpackungsmaschine nach einem der vorangehenden Ansprüche, **dadurch gekennzeichnet, dass** die Soll-Prozesswerte (S) eine optimale Form- und/oder Siegeltemperatur, einen optimalen Heiz-, Siegel- und/oder Formdruck, und/oder für eine als Formstation ausgebildete Arbeitseinheit (3) mindestens eine Stabilisierungszeit angeben.

13. Verpackungsmaschine nach einem der vorangehenden Ansprüche, **dadurch gekennzeichnet, dass** die jeweiligen Messeinrichtungen (5) mindestens einen Kraft-, Druck-, Weg-, Temperatur-, Infrarot-, Ultraschall-, Induktions-, Laser- und/oder Feuchtigkeitssensor umfassen.

14. Verfahren zur Selbststeuerung eines Programmablaufs (P) eines Prozesses an unterschiedlichen Arbeitseinheiten (3) einer Verpackungsmaschine (1), wobei gemäß dem Programmablauf (P) ein Prozess und/oder gemäß dem Programmablauf (P) mehrere, funktional aufeinander abgestimmte Prozesse während des Betriebs der Verpackungsmaschine (1) an den jeweiligen Arbeitseinheiten (3) durchgeführt werden, wobei an den jeweiligen Arbeitseinheiten (3) Ist-Prozesswerte (I) erfasst und an eine Steuereinheit (2) der Verpackungsmaschine (1) weitergeleitet werden, wobei die Steuereinheit (2) die an sie weitergeleiteten Ist-Prozesswerte (I) mit dazugehörigen Soll-Prozesswerten (S) vergleicht und daraus resultierend den jeweiligen Programmablauf (P) für die Arbeitseinheiten (3) selbst und/oder bezüglich der jeweiligen Arbeitseinheiten (3) aufeinander abgestimmt selbststeuernd herstellt und darauf basierend den Betrieb der Verpackungsmaschine (1) koordiniert, wobei innerhalb eines Arbeitstakts an der Verpackungsmaschine (1) mindestens ein erster Funktionsvorgang und ein zweiter Funktionsvorgang an einer oder an unterschiedlichen Arbeitseinheiten (3) ablaufen, wobei der zweite Funktionsvorgang später beginnt als der erste Funktionsvorgang, wobei die Steuereinheit (2) für den zweiten Funktionsvorgang des Programmablaufs (P) einer Arbeitseinheit (3) einen Frühstart durchführt, wenn ein Ist-Prozesswert (I) des ersten Funktionsvorgangs des Programmablaufs (P) der oder einer anderen Arbeitseinheit (3) noch nicht den jeweiligen Soll-Prozesswert (S) erreicht hat, wobei die Steuereinheit (2) den Frühstart basierend auf einer vorbestimmten Reaktionszeit (R) der Arbeitseinheit (3) für den zweiten Funktionsvorgang des Programmablaufs (P) der Arbeitseinheit (3) durchführt,
**dadurch gekennzeichnet, dass**
die Steuereinheit (2) den Frühstart des zweiten Funktionsvorgangs basierend auf einem Näherungsverfahren zur Vorbestimmung des zeitlichen Endes des ersten Funktionsvorgangs mittels einer an der Arbeitsstation (3) mittels einer der Messeinrichtungen (5) erfassten zeitabhängigen Messgröße des ersten Funktionsvorgangs ansteuert, und
dass die Steuereinheit (2) basierend auf dem Näherungsverfahren eine verbleibende Restlaufzeit des ersten Funktionsablaufs bestimmt, welche die Dauer angibt, bis die Messgröße den Soll-Prozesswert (S) erreicht, wobei die Steuereinheit (2) ferner den Frühstart spätestens dann einleitet, wenn die Restlaufzeit kleiner oder gleich der vorbestimmten Reaktionszeit (R) ist.

15. Verfahren nach Anspruch 14, **dadurch gekennzeichnet, dass** das Näherungsverfahren eine Änderungsrate der an der Arbeitsstation (3) erfassten Messgröße des ersten Funktionsvorgangs bestimmt oder eine Anpassung an eine vorgegebene mathematische Funktion durchführt.

16. Verfahren nach Anspruch 15, **dadurch gekennzeichnet, dass** die Steuereinheit (2) einen Schwellenwert für die Änderungsrate bestimmt, wobei die Steuereinheit (2) eine Berechnung der Restlaufzeit startet, wenn die Änderungsrate dem Schwellenwert entspricht oder kleiner als der Schwellenwert ist.

## Claims

1. A packaging machine (1), comprising a control unit (2), a plurality of measuring devices (5) as well as a plurality of working units (3) for different processes, wherein the control unit (2) is functionally connected to the working units (3) and the measuring devices (5),
wherein the measuring devices (5) are configured to detect actual process values (I) at the respective working units (3) and to forward them to the control unit (2), so as to monitor a process status at the respective working units (3),
wherein the control unit (2) is configured to establish in a self-controlling manner, by a comparison (V) of the actual process values (I) forwarded to the control unit (2) from the respective measuring devices (5) and of associated target process values (S) from a memory (7) connected to said control unit (2), a program sequence (P) for the respective individual working units (3) and/or such that the program sequences (P) of the respective working units (3) are adapted with respect to one another, wherein, according to this program sequence (P), the respective working units (3) operate, depending on the actual process values (I) detected thereat, individually and/or such that they are adapted with respect to one another,
wherein a work cycle at the packaging machine (1) comprises at least a first functional process and a second functional process at one or at different working units (3), the second functional process starting later than the first functional process,
wherein the control unit (2) is configured for executing an early start for the second functional process of a working unit (3), when an actual process value of the preceding first functional process of the program sequence (P) of the working unit (3) or of another working unit (3) has not yet reached the respective target process value (S), and
wherein the control unit (2) is configured for executing the early start based on a predetermined reaction time of the working unit (3) for the second functional process of the program sequence (P) of the working unit (3),
**characterized in that** the control unit (2) is configured for controlling the early start of the second functional process based on an approximation method for predetermining the temporal end of the first functional process by means of a time-dependent measured variable of the first functional process detected at the working unit (3) by means of one of the measuring devices (5), and
the control unit (2) is configured to determine, based on the approximation method, a residual remaining time of the preceding first functional process, said remaining time indicating the length of time until the measured variable will reach the target process value (S), the control unit (2) being additionally configured for executing the early start, when the remaining time is shorter than or equal to the predetermined reaction time (R).

2. The packaging machine according to claim 1, **characterized in that,** by means of the approximation method, a process-dependent rate of change of a time-dependent measured variable of the first functional process is determinable, said measured variable being detected at the working unit (3) by means of one of the measuring devices (5), or an adaptation to a predetermined mathematical function is executable.

3. The packaging machine according to claim 2, **characterized in that** a threshold value for the rate of change is stored for the control unit (2), wherein the control unit (2) is configured to start a calculation of the remaining time, when the rate of change corresponds to the threshold value or is smaller than the threshold value.

4. The packaging machine according to claim 3, **characterized in that** the control unit (2) is configured for determining the threshold value on the basis of a trend control.

5. The packaging machine according to claim 4, **characterized in that** the control unit (2) is configured to increase or decrease the threshold value step by step until the calculated remaining time is, at least once, longer than the predetermined reaction time (R).

6. The packaging machine according to claim 5, **characterized in that** the control unit (2) is connected to a circular buffer for specifying the condition.

7. The packaging machine according to one of the previous claims, **characterized in that** the control unit (2) is configured to continuously execute a calculation of the remaining time and to delay the early start until the calculated remaining time is shorter than or equal to the predetermined reaction time (R).

8. The packaging machine according to one of the preceding claims 2 to 7, **characterized in that** the measured variable is a pressure (P), which is applied to the working unit (3) and which is detectable by means of a pressure sensor formed on the working unit (3) and functionally connected to the control unit (2), and that the rate of change calculable by means of the control unit (2) determines a speed rate of change of the detected pressure (P).

9. The packaging machine according to one of the preceding claims, **characterized in that** the control unit (2) is configured to cyclically determine the reaction time in the case of each functional process, and to calculate an averaged reaction time by averaging a predetermined number of detected reaction times, the early start of the second functional process being executable with respect to said averaged reaction time.

10. The packaging machine according to claim 9, **characterized in that** the control unit (2) comprises an emergency control for operating the packaging machine (1), the control unit (2) being configured to replace the process-data-based control of the packaging machine (1) by a time-based control, when a predetermined number of calculated reaction times reaches or exceeds a functional threshold value during the operation of the packaging machine (1).

11. The packaging machine according to one of the preceding claims, **characterized in that** the packaging machine (1) is a thermoform packaging machine (15), a tray sealer (28) or a belted chamber machine (29).

12. The packaging machine according to one of the preceding claims, **characterized in that** the target process values (S) indicate an optimum molding and/or sealing temperature, an optimum heating, sealing and/or molding pressure, and/or for a working unit (3) configured as a molding station at least one stabilization time.

13. The packaging machine according to one of the preceding claims, **characterized in that** the respective measuring devices (5) comprise at least one force, pressure, position, temperature, infrared, ultrasonic, induction, laser and/or moisture sensor.

14. A method of self-controlling a program sequence (P) of a process at different working units (3) of a packaging machine (1), wherein according to the program sequence (P) one process and/or according to the program sequence (P) a plurality of processes that are functionally adapted to one another are executed at the respective working units (3) while the packaging machine (1) is in operation, wherein actual process values (I) are detected at the respective working units (3) and forwarded to a control unit (2) of the packaging machine (1), wherein the control unit (2) compares the actual process values (I) forwarded thereto with associated target process values (S) and establishes as a result, in a self-controlling manner, the respective program sequence (P) for the individual working units (3) and/or such that the program sequences (P) of the respective working units (3) are adapted with respect to one another, and coordinates on the basis thereof the operation of the packaging machine (1), wherein within a work cycle at the packaging machine (1) at least a first functional process and a second functional process take place at one or at different working units (3), the second functional process starting later than the first functional process, wherein the control unit (2) executes an early start for the second functional process of the program sequence (P) of a working unit (3), if an actual process value (I) of the first functional process of the program sequence (P) of the working unit (3) or of another working unit (3) has not yet reached the respective target process value (S), wherein the control unit (2) executes the early start based on a predetermined reaction time (R) of the working unit (3) for the second functional process of the program sequence (P) of the working unit (3),
**characterized in that** the control unit (2) controls the early start of the second functional process based on an approximation method for predetermining the temporal end of the first functional process by means of a time-dependent measured variable of the first functional process detected at the work station (3) by means of one of the measuring devices (5), and
the control unit (2) determines, based on the approximation method, a residual remaining time of the first functional process, said residual remaining time indicating the length of time until the measured variable will reach the target process value (S), the control unit (2) additionally initiating the early start at the latest, when the remaining time is shorter than or equal to the predetermined reaction time (R).

15. The method according to claim 14, **characterized in that** the approximation method determines a rate of change of the measured variable of the first functional process detected at the work station (3) or executes an adaptation to a predetermined mathematical function.

16. The method according to claim 15, **characterized in that** the control unit (2) determines a threshold value for the rate of change, wherein the control unit (2) starts a calculation of the remaining time, when the rate of change corresponds to the threshold value or is smaller than the threshold value.

## Revendications

1. Machine d'emballage (1), qui comprend une unité de commande (2), plusieurs dispositifs de mesure (5), ainsi que plusieurs unités de travail (3) pour différents processus, machine d'emballage dans laquelle l'unité de commande (2) est reliée, sur le plan fonctionnel, aux unités de travail (3) ainsi qu'aux dispositifs de mesure (5),
dans laquelle les dispositifs de mesure (5) sont configurés pour relever des valeurs de processus réelles (I) au niveau des unité de travail (3) respectives, et les transmettre à l'unité de commande (2), en vue de surveiller un statut de processus au niveau des unités de travail (3) respectives,
dans laquelle l'unité de commande (2) est conçue pour, grâce à une comparaison (V) des valeurs de processus réelles (I), qui lui ont été transmises par les dispositifs de mesure (5) respectifs, avec des valeurs de processus de consigne (S) associées en provenance d'une mémoire (7) qui lui est reliée, établir de manière auto-commandée un déroulement de programme (P) pour les unités de travail (3) respectives elles-mêmes et/ou de manière mutuellement adaptée relativement aux unités de travail (3), déroulement de programme conformément auquel fonctionnent les unités de travail (3) respectives elles-mêmes et/ou de manière mutuellement adaptée, en fonction des valeurs de processus réelles (I), qui y ont été relevées,
dans laquelle un cycle de travail dans la machine d'emballage (1) comprend une première opération fonctionnelle et une deuxième opération fonctionnelle au niveau d'une ou de différentes unités de travail (3), la deuxième opération fonctionnelle débutant plus tard que la première opération fonctionnelle,
dans laquelle l'unité de commande (2) est conçue pour effectuer un démarrage précoce pour la deuxième opération fonctionnelle d'une unité de travail (3), lorsqu'une valeur de processus réelle de la première opération fonctionnelle précédente du déroulement de programme (P) de ou d'une autre unité de travail (3) n'a pas encore atteint la valeur de processus de consigne (S) respective, et
dans laquelle l'unité de commande (2) est conçue pour effectuer le démarrage précoce, en se basant sur un temps de réaction prédéterminé de l'unité de travail (3) pour la deuxième opération fonctionnelle du déroulement de programme (P) de l'unité de travail (3),
**caractérisée en ce que**
l'unité de commande (2) est conçue pour commander le démarrage précoce de la deuxième opération fonctionnelle, en se basant sur un procédé d'approximation pour prédéterminer la fin temporelle de la première opération fonctionnelle au moyen d'une grandeur de mesure, fonction du temps, de la première opération fonctionnelle, relevée au niveau de l'unité de travail (3) au moyen de l'un des dispositifs de mesure (5), et
l'unité de commande (2) est conçue pour déterminer, sur la base du procédé d'approximation, une durée de marche restante du premier déroulement de fonctionnement précédent, qui indique la durée jusqu'à ce que la grandeur de mesure atteigne la valeur de processus de consigne (S), l'unité de commande (2) étant par ailleurs conçue pour effectuer le démarrage précoce lorsque la durée de marche restante est inférieure ou égale au temps de réaction (R) prédéterminé.

2. Machine d'emballage selon la revendication 1, **caractérisée en ce qu'**au moyen du procédé d'approximation, il est possible de déterminer un taux de variation fonction du processus, d'une grandeur de mesure, fonction du temps, de la première opération fonctionnelle, qui est relevée au moyen de l'un des dispositifs de mesure (5) au niveau de l'unité de travail (3), ou d'effectuer une adaptation à une fonction mathématique prédéterminée.

3. Machine d'emballage selon la revendication 2, **caractérisée en ce que** pour l'unité de commande (2), on a mémorisé une valeur de seuil concernant le taux de variation, l'unité de commande (2) étant conçue pour démarrer un calcul du temps de marche restant, lorsque le taux de variation correspond à la valeur de seuil ou est plus petit que la valeur de seuil.

4. Machine d'emballage selon la revendication 3, **caractérisée en ce que** l'unité de commande (2) est conçue pour déterminer la valeur de seuil au regard d'une régulation de tendance.

5. Machine d'emballage selon la revendication 4, **caractérisée en ce que** l'unité de commande (2) est conçue pour augmenter ou abaisser pas à pas la valeur de seuil, jusqu'à ce que la durée de marche restante calculée soit au moins une fois supérieure au temps de réaction (R) prédéterminé.

6. Machine d'emballage selon la revendication 5, **caractérisée en ce que** l'unité de commande (2) est reliée à une mémoire tampon annulaire pour fixer la condition.

7. Machine d'emballage selon l'une des revendications précédentes, **caractérisée en ce que** l'unité de commande (2) est conçue pour effectuer en continu un calcul de la durée de marche restante, et retarder le démarrage précoce, jusqu'à ce que la durée de marche restante soit inférieure ou égale au temps de réaction (R) prédéterminé.

8. Machine d'emballage selon l'une des revendications précédentes 2 à 7, **caractérisée en ce que** la grandeur de mesure est une pression (P) régnant au niveau de l'unité de travail (3), qui peut être relevée au moyen d'un capteur de pression réalisé sur l'unité de travail (3) et relié fonctionnellement à l'unité de commande (2), et le taux de variation pouvant être calculé au moyen de l'unité de commande (2) définit une vitesse de variation de la pression (P) relevée.

9. Machine d'emballage selon l'une des revendications précédentes, **caractérisée en ce que** l'unité de commande (2) est conçue pour déterminer de manière cyclique le temps de réaction à chaque opération fonctionnelle, et pour, à partir de la formation d'une valeur moyenne d'un nombre prédéterminé de temps de réaction relevés, calculer un temps de réaction moyen, au regard duquel peut être exécuté le démarrage précoce de la deuxième opération fonctionnelle.

10. Machine d'emballage selon la revendication 9, **caractérisée en ce que** l'unité de commande (2) comprend une commande d'urgence pour le fonctionnement de la machine d'emballage (1), l'unité de commande (2) étant conçue pour remplacer la commande se basant sur les données de processus de la machine d'emballage (1), par une commande basée sur le temps, lorsqu'un nombre prédéterminé de temps de réaction calculés atteint, pendant le fonctionnement de la machine d'emballage (1), une valeur de seuil fonctionnelle ou dépasse celle-ci.

11. Machine d'emballage selon l'une des revendications précédentes, **caractérisée en ce que** la machine d'emballage (1) est une machine d'emballage par emboutissage ou thermoformage (15), une machine de scellage de barquettes (28) ou une machine à chambre et tapis (29).

12. Machine d'emballage selon l'une des revendications précédentes, **caractérisée en ce que** les valeurs de processus de consigne (S) indiquent une température optimale de formage et/ou de scellage, une pression optimale de chauffage, de scellage et/ou de formage, et/ou au moins un temps de stabilisation pour une unité de travail (3) réalisée en tant que poste de formage.

13. Machine d'emballage selon l'une des revendications précédentes, **caractérisée en ce que** les dispositifs de mesure (5) respectifs comprennent au moins un capteur de force, de pression, de température, à infrarouge, à ultrasons, à induction, à laser et/ou d'humidité.

14. Procédé pour la commande automatique d'un déroulement de programme (P) d'un processus au niveau de différentes unités de travail (3) d'une machine d'emballage (1), procédé
d'après lequel, conformément au déroulement de programme (P), un processus, et/ou conformément au déroulement de programme (P), plusieurs processus fonctionnellement adaptés les uns aux autres, sont exécutés sur les unités de travail (3) respectives pendant le fonctionnement de la machine d'emballage (1),
d'après lequel des valeurs de processus réelles (I) sont relevées au niveau des unités de travail (3) respectives et sont transmises à une unité de commande (2) de la machine d'emballage (1),
d'après lequel l'unité de commande (2) compare les valeurs de processus réelles (I), qui lui ont été transmises, à des valeurs de processus de consigne (S) associées, et, à partir de ces résultats, élabore de manière auto-commandée le déroulement de programme (P) respectif pour les unités de travail (3) elles-mêmes, et/ou de manière mutuellement adaptée relativement aux unités de travail (3), et, en se basant là-dessus, coordonne le fonctionnement de la machine d'emballage (1),
d'après lequel pendant un cycle de travail sur la machine d'emballage (1) se déroule au moins une première opération fonctionnelle et une deuxième opération fonctionnelle au niveau d'une ou de différentes unités de travail (3),
d'après lequel la deuxième opération fonctionnelle débute plus tard que la première opération fonctionnelle,
d'après lequel l'unité de commande (2) effectue un démarrage précoce pour la deuxième opération fonctionnelle du déroulement de programme (P) d'une unité de travail (3), lorsqu'une valeur de processus réelle (I) de la première opération fonctionnelle du déroulement de programme (P) de ou d'une autre unité de travail (3) n'a pas encore atteint la valeur de processus de consigne (S) respective, et
d'après lequel l'unité de commande (2) effectue le démarrage précoce, en se basant sur un temps de réaction (R) prédéterminé de l'unité de travail (3), pour la deuxième opération fonctionnelle du déroulement de programme (P) de l'unité de travail (3),
**caractérisé en ce que**
l'unité de commande (2) commande le démarrage précoce de la deuxième opération fonctionnelle, en se basant sur un procédé d'approximation pour prédéterminer la fin temporelle de la première opération fonctionnelle au moyen d'une grandeur de mesure, fonction du temps, de la première opération fonctionnelle, relevée au niveau de l'unité de travail (3) au moyen de l'un des dispositifs de mesure (5), et
l'unité de commande (2) détermine, sur la base du procédé d'approximation, une durée de marche restante du premier déroulement de fonctionnement précédent, qui indique la durée jusqu'à ce que la grandeur de mesure atteigne la valeur de processus de consigne (S), l'unité de commande (2) effectuant par ailleurs le démarrage précoce, lorsque la durée de marche restante est inférieure ou égale au temps de réaction (R) prédéterminé.

15. Procédé selon la revendication 14, **caractérisé en ce que** le procédé d'approximation détermine un taux de variation de la grandeur de mesure de la première opération fonctionnelle, qui est relevée au niveau de l'unité de travail (3), ou effectue une adaptation à une fonction mathématique prédéterminée.

16. Procédé selon la revendication 15, **caractérisé en ce que** l'unité de commande (2) détermine une valeur de seuil pour le taux de variation, l'unité de commande (2) démarrant un calcul du temps de marche restant, lorsque le taux de variation correspond à la valeur de seuil ou est plus petit que la valeur de seuil.
